(19) Europäisches Patentamt
European Patent Office
Office européen des brevets

(11) **EP 1 990 396 A1**

(12) **EUROPEAN PATENT APPLICATION**
published in accordance with Art. 158(3) EPC

(43) Date of publication:
**12.11.2008 Bulletin 2008/46**

(51) Int Cl.:
***C09K 11/64*** (2006.01)   ***C09K 11/08*** (2006.01)
***C22C 28/00*** (2006.01)

(21) Application number: **07737422.1**

(22) Date of filing: **27.02.2007**

(86) International application number:
**PCT/JP2007/053620**

(87) International publication number:
**WO 2007/099942 (07.09.2007 Gazette 2007/36)**

(84) Designated Contracting States:
**DE**

(30) Priority: **28.02.2006  JP 2006053093**

(71) Applicant: **Mitsubishi Chemical Corporation**
**Minato-ku**
**Tokyo 108-0014 (JP)**

(72) Inventors:
 • **WATANABE, Hiromu,**
**c/o Mitsubishi Chem. Group Sci. & Techn.**
**Yokohama-shi, Kanagawa 227-8502 (JP)**
 • **KIJIMA, Naoto,**
**c/o Mitsubishi Chem. Group Sci. & Techn.**
**Yokohama-shi, Kanagawa 227-8502 (JP)**
 • **WADA, Hiroshi,**
**c/o Mitsubishi Chem. Group Sci. & Techn.**
**Yokohama-shi, Kanagawa 227-8502 (JP)**

(74) Representative: **HOFFMANN EITLE**
**Patent- und Rechtsanwälte**
**Arabellastrasse 4**
**81925 München (DE)**

(54) **PHOSPHOR RAW MATERIAL AND METHOD FOR PRODUCING ALLOY FOR PHOSPHOR RAW MATERIAL**

(57)    Disclosed is a phosphor raw material which enables the production of phosphors with excellent characteristics and only small amounts of impurities. Specifically disclosed is a phosphor raw material that is in the form of an alloy and contains at least Si and one or more metal elements other than Si. Also disclosed is a method for producing an alloy for phosphor precursor that contains tetravalent metal elements $M^4$ including at least Si and one or more alkaline earth metal elements as divalent metal elements $M^2$. This method for producing an alloy for phosphor precursor is **characterized in that** a step of melting Si and/or an alloy containing Si is performed before a step of melting alkaline earth metals.

Fig. 1a

GRADIENT: 0.972

Eu (Ch3) CUBE ROOT VOLTAGE [V] vs Si (Ch2) CUBE ROOT VOLTAGE [V]

Fig. 1b

**Description**

Technical Field

The present invention relates to raw materials of phosphors and, in particular, to a phosphor raw material containing constituent elements thereof uniformly. Examples of such a phosphor raw material may include an alloy for phosphor precursor. The present invention also relates to a method for producing such an alloy for phosphor precursor.

Background Art

Phosphors are used in such apparatuses as fluorescent lights, vacuum fluorescent displays (VFD), field emission displays (FED), plasma display panels (POP), cathode-ray tubes (CRT) and white light-emitting diodes (LED). In any of these applications, a phosphor requires the supply of excitation energy for emitting light. After being excited by a high-energy source that emits vacuum ultraviolet light, ultraviolet light, visible light, electron beams or the like, such a phosphor emits ultraviolet light, visible light or infrared light. However, there has been a problem that the long-term exposure of a phosphor to such an energy source may result in the deterioration of brightness.

In response to this, a lot of novel ternary or more complex nitrides have recently been developed as alternatives to known phosphors, such as silicate, phosphate, aluminate, borate, sulfide and oxysulfide phosphors. In particular, recently developed silicon nitride-based multicomponent nitrides and oxynitrides exhibit excellent characteristics as phosphors.

Patent Document 1 discloses phosphors represented by the general formula $M_xSi_yN_z$:Eu (M is one or more alkaline earth metal elements selected from the group consisting of Ca, Sr and Ba, whereas x, y and z are numbers that satisfy the relationship expressed as z = 2/3x + 4/3y). Such phosphors are synthesized by nitridation alkaline earth metal elements and then mixing the obtained alkaline earth metal element nitrides with silicon nitride or by heating alkali earth metals and silicon imides as raw materials under nitrogen or argon flow. Both synthetic methods require alkaline earth metal element nitrides susceptible to air and moisture as raw materials, and thus are unsuitable for industrial manufacturing.

Patent Document 2 discloses oxynitride phosphors having the oxynitride structure represented by the general formula $M_{16}Si_{15}O_6N_{32}$ or the sialon structure represented by one of the general formula $MSiAl_2ON_2$, $M_{13}Si_{18}Al_{12}O_{18}N_{36}$, $MSi_5Al_2ON_9$ and $M_3Si_5AlON_{10}$. It states that, particularly in the case where M was Sr, heating the mixture of $SrCO_3$, AlN and $Si_3N_4$ at the ratio of 1:2:1 under a reducing atmosphere (hydrogen-containing nitrogen atmosphere) resulted in the formation of $SrSiAl_2O_3N_2$:$Eu^{2+}$.
This approach provides oxynitride phosphors only and thus does not provide phosphors based on nitrides free from oxygen.

Furthermore, raw materials of the nitride or oxynitride phosphors described above have low reactivity in a powder form, so in the calcination step the raw materials should be heated with the contact area of each particle thereof being as large as possible in order to promote the solid state reaction between the particles. As a result, the synthesized phosphor is in the state of being compacted at high temperatures, in other words, in the state of a very hard sintered body. Such a sintered body should be ground into fine particles, which is a form suitable for its intended purposes as a phosphor. However, milling such a hard sintered body of a phosphor for a long period of time with tremendous energy in an ordinary mechanical method, for example, with the use of a jaw crusher or a ball mill, would result in the generation of many defects in the host crystal of the phosphor and thereby lead to the significant deterioration of the light emission intensity.

Meanwhile, the patent documents state that, in the production of such nitride or oxynitride phosphors, alkaline earth metal element nitrides such as calcium nitride ($Ca_3N_2$) and strontium nitride ($Sr_3N_2$) are preferably used. However, in general, divalent metal nitrides are likely to react with water to produce hydroxides and thus unstable under a humid atmosphere. This tendency is remarkable especially in the particles of $Sr_3N_2$ and metal Sr, so these kinds of nitrides are very difficult to handle.

For the reasons described above, novel raw materials of phosphors and methods for producing them are demanded.

Patent Document 3 that describes a method for producing a nitride phosphor using a metal as a starting material was recently published. In Patent Document 3, an example of the methods for producing an aluminum nitride-based phosphor is disclosed, wherein it is stated that transition elements, rare earth elements, aluminum and alloys thereof can be used as the starting material. However, in this patent document, no example wherein such an alloy was actually used as the starting material is found and the source of A1 used is metal Al. Also, the invention disclosed in this patent document is totally different from the present invention in that it uses a combustion synthesis method wherein starting materials are ignited and instantly heated to a high temperature (3000 K), so the inventors presume that it is difficult to obtain a high-performance phosphor in this method. More specifically, the method in which the starting materials are instantly heated to a temperature as high as 3000 K has difficulties in distributing activator elements evenly and thus cannot easily provide a high-performance phosphor. In addition, neither alkaline earth metal element- nor silicon-containing nitride phosphors produced from alloys as starting materials are described in this patent document.

Meanwhile, examples of known alloys containing both Si and alkaline earth metal elements are $Ca_7Si$, $Ca_2Si$, $Ca_5Si_3$, $CaSi$, $Ca_2Si_2$, $Ca_{14}Si_{19}$, $Ca_3Si_4$, $SrSi$, $SrSi_2$, $Sr_4Si_7$ $Sr_5Si_3$ and $Sr_7Si$. Also, examples of known alloys containing Si, aluminum and alkaline earth metal elements include $Ca(Si_{1-x}Al_x)_2$, $Sr(Si_{1-x}Al_x)_2$, $Ba(Si_{1-x}Al_x)_2$, $Ca_{1-x}Sr_x(Si_{1-y}Al_y)_2$. In particular, $A(B_{0.5}Si_{0.5})_2$ (A is one or more elements selected from the group consisting of Ca, Sr and Ba, whereas B is Al and/or Ga) has been studied on its superconductive properties, and is described in publications such as Non-patent Documents 1 and 2. However, there has been no case where such alloys were actually used as raw materials of a phosphor. Furthermore, such alloys were prepared only in small quantities in laboratories for research purposes, and they have never been produced in industry.

Patent Document 1: PCT Japanese Translation Patent Publication No. 2003-515665
Patent Document 2: Japanese Unexamined Patent Application Publication No. 2003-206481
Patent Document 3: Japanese Unexamined Patent Application Publication No. 2005-54182
Non-patent Document 1: M. Imai, Applied Physics Letters, 80 (2002) 1019-1021
Non-patent Document 2: M. Imai, Physical Review B, 68, (2003), 064512

In the production of a phosphor, impurities originally contained in raw materials of the phosphor or impurities contaminating the production process would affect the light emission properties of the resulting phosphor even at the slightest amount.

This requires the amount of impurities contained in or contaminating raw materials of a phosphor to be as low as possible.

Furthermore, when used as a raw material of such a phosphor, an alloy produced in known manufacturing processes sometimes contains impurities and thus affects the light emission properties of the resulting phosphor. Moreover, alkaline earth metal elements contained in such a raw material in the form of alloy have low boiling points and are highly volatile, thereby making it difficult to obtain an alloy with an intended composition. In short, there has been no established technique for the industrial mass production of alloys that contain both Si and alkaline earth metal elements and are suitable as raw materials of a phosphor.

Summary of Invention

Therefore, an object of the present invention is to provide a phosphor raw material that contains little or no impurities and forms a high-performance phosphor.

The inventors made an extensive investigation to address the problems described above and the result of their analysis using a particle analyzer demonstrated that a raw material particularly suitable for the production of a phosphor has, in a synchronous distribution chart representing the relationship between the cube root voltage of any one of elements constituting the phosphor raw material and the cube root voltage of another element, the absolute deviation of accidental errors therebetween being equal to or less than a certain value. The inventors found that alloy is a particularly preferred form of such a phosphor raw material.

The inventors also found that an alloy for phosphor precursor wherein the alloy has an intended chemical composition, alkaline earth metal elements and other low-boiling point elements are prevented from volatilizing and the constituent elements of the alloy are uniformly distributed can be obtained at a high reproducibility by melting Si before melting alkaline earth metal elements.

The prevent invention was made based on the above-mentioned findings.

The first aspect of the phosphor raw material is an alloy containing at least Si and one or more metal elements other than Si.

This phosphor raw material may contain one or more activator elements $M^1$ as the metal elements other than Si. This phosphor raw material may contain one or more activator elements $M^1$ uniformly.

The second aspect of the phosphor raw material contains tetravalent metal elements $M^4$ including at least Si and one or more metal elements other than the tetravalent metal elements $M^4$, and, in a synchronous distribution chart representing the relationship between the cube root voltage of any one of the metal elements $M^4$ and the cube root voltage of any one of the metal elements other than the metal elements $M^4$, which can be measured using a particle analyzer, the absolute deviation of accidental errors therebetween is equal to or less than 0.19.

In the second aspect, the metal elements other than the metal elements $M^4$ may be one or more elements selected from the group consisting of activator elements $M^1$, divalent metal elements $M^2$ and trivalent metal elements $M^3$. This phosphor raw material may contain activator elements $M^1$.

The third aspect of the phosphor raw material contains tetravalent metal elements $M^4$ including at least Si and one or more activator elements $M^1$, and, in a synchronous distribution chart indicating the relationship between the cube root voltage of any one of the metal

elements $M^4$ and the cube root voltage of any one of the activator elements $M^1$, which can be measured using a particle analyzer, the absolute deviation of accidental errors therebetween is equal to or less than 0.4.

In the second and third aspects, the phosphor raw material may be in the form of an alloy.

The fourth aspect of the phosphor raw material is formed of an alloy containing one or more activator elements $M^1$ and one or more metal elements other than the activator elements $M^1$,

and, in a synchronous distribution chart indicating the relationship between the cube root voltage of any one of the activator elements $M^1$ and the cube root voltage of any one of the metal elements other than the activator elements $M^1$, which can be measured using a particle analyzer, the absolute deviation of accidental errors therebetween is equal to or less than 0.4.

The phosphor raw material in the fourth aspect may contain tetravalent metal elements $M^4$ including at least Si.

In the first to fourth aspects, the phosphor raw material may be an alloy containing activator elements $M^1$, divalent metal elements $M^2$ and tetravalent metal elements $M^4$ including at least Si. This phosphor raw material may be an alloy containing alkaline earth metal elements as the divalent metal elements $M^2$ or an alloy further containing trivalent metal elements $M^3$.

The activator elements $M^1$ may be one or more elements selected from the group consisting of Cr, Mn, Fe, Ce, Pr, Nd, Sm, Eu, Tb, Dy, Ho, Er, Tm and Yb.

The divalent metal elements $M^2$ may be one or more elements selected from the group consisting of Mg, Ca, Sr, Ba and Zn,

the trivalent metal elements $M^3$ may be one or more elements selected from the group consisting of Al, Ga, In and Sc, and

the tetravalent metal elements $M^4$ should include at least Si and may further include one or more elements selected from the group consisting of Ge, Sn, Ti, Zr and Hf as needed.

Ca and/or Sr may account for 50 mol% or more of the divalent metal elements $M^2$,

Al may account for 50 mol% or more of the trivalent metal elements $M^3$, and

Si may account for 50 mol% or more of the tetravalent metal elements $M^4$ including at least Si.

The phosphor raw material may contain

Eu as one of the activator elements $M^1$,

Ca and/or Sr as the divalent metal elements $M^2$,

Al as one of the trivalent metal elements $M^3$, and

Si as one of the tetravalent metal elements $M^4$ including at least Si.

The fifth aspect relates to a method for producing an alloy for phosphor precursor, wherein the raw material contains tetravalent metal elements $M^4$ including at least Si and one or more alkaline earth metal elements as divalent metal elements $M^2$, and

Si and/or an alloy containing Si are first melted and then the alkaline earth metal elements are melted.

In this method, Si and/or the alloy containing Si and the alkaline earth metal elements may be melted by a high-frequency dielectric heating method.

This method provides a phosphor raw material that contains little or no impurities and forms a high-performance phosphor. The use of the phosphor raw material according to the present invention enables producing a phosphor excellent in brightness and other light emission properties at low cost.

Also, the present invention enables industrial manufacturing of an alloy for phosphor precursor that contains Si and alkaline earth metal elements.

Brief Description of the Drawings

[Fig. 1] Fig. 1a is a diagram that explains the principle of a particle analyzer and a synchronous distribution chart representing the relationship between the cube root voltage of Si atoms (horizontal axis) and the cube root voltage of Eu atoms (vertical axis), whereas Fig. 1b is a histogram of accidental errors.

[Fig. 2] Fig. 2 is a X-ray powder diffraction pattern of the alloy that was prepared so as to have the composition ratio of Eu:Sr:Ca:Al:Si = 0.008:0.792:0.2:1:1 in Example 1.

[Fig. 3] Fig. 3a is a two-element synchronous distribution chart obtained for Si and Al in the analysis of the alloy powder in Example 1 using a particle analyzer, Fig. 3b is a histogram of accidental errors, and Fig. 3c is the particle size distribution chart for Al.

[Fig. 4] Fig. 4a is a two-element synchronous distribution chart obtained for Sr and Si in the analysis of the alloy powder in Example 1 using a particle analyzer, Fig. 4b is a histogram of accidental errors, and Fig. 4c is the particle size distribution chart for Sr.

[Fig. 5] Fig. 5a is a two-element synchronous distribution chart obtained for Ca and Si in the analysis of the alloy powder in Example 1 using a particle analyzer, Fig. 5b is a histogram of accidental errors, and Fig. 5c is the particle size distribution chart for Ca.

[Fig. 6] Fig. 6a is a two-element synchronous distribution chart obtained for Eu and Si in the analysis of the alloy powder in Example 1 using a particle analyzer, Fig. 6b is a histogram of accidental errors, and Fig. 6c is the particle size distribution chart for Eu.

[Fig. 7] Fig. 7 is the particle size distribution chart for Si obtained in the analysis of the alloy powder in Example 1 using a particle analyzer.

[Fig. 8] Fig. 8 is a X-ray powder diffraction pattern of the alloy that was prepared so as to have the composition ratio of Eu:Sr:Al:Si = 0.008:0.992:1:1 in Example 2.

[Fig. 9] Fig. 9 is a X-ray powder diffraction pattern of the alloy that was prepared so as to have the composition ratio of Eu:Sr:Al:Si = 0.008:0.992:1:1 in Comparative Example 2, where the alloy was produced by melting the metal raw materials under an argon atmosphere almost simultaneously by arc melting.

[Fig. 10] Fig. 10a is a two-element synchronous distribution chart obtained for Al and Si in the analysis of the phosphor raw material in Comparative Example 3 using a particle analyzer, Fig. 10b is a histogram of accidental errors, and Fig. 10c is the particle size distribution chart for Al.

[Fig. 11] Fig. 11a is a two-element synchronous distribution chart obtained for Ca and Si in the analysis of the phosphor raw material in Comparative Example 3 using a particle analyzer, Fig. 11b is a histogram of accidental errors, and Fig. 11c is the particle size distribution chart for Ca.

[Fig. 12] Fig. 12a is a two-element synchronous distribution chart obtained for Eu and Si in the analysis of the phosphor raw material in Comparative Example 3 using a particle analyzer, Fig. 12b is a histogram of accidental errors, and Fig. 12c is the particle size distribution chart for Eu.

[Fig. 13] Fig. 13 is the particle size distribution chart for Si obtained in the analysis of the phosphor raw material in Comparative Example 3 using a particle analyzer.

Detailed Description of the Invention

The embodiments of the present invention are described in detail below. However, the present invention is not limited thereto and various modifications can be made without departing from the scope of its summary.

[Phosphor raw material]

The phosphor raw material of the present invention is not particularly limited as long as it can be used as a raw material of a phosphor. It contains two or more of the constituent elements of an intended phosphor and is characterized in that the constituent elements are uniformly distributed.

Specific examples of the form of the phosphor raw material according to the present invention include a coprecipitating material and an alloy. In particular, an alloy is preferable because it achieves the uniform distribution of its constituent elements and a high purity. In addition, a coprecipitating material and an alloy may be used in combination. It should be noted that, hereinafter, the phosphor raw material of the present invention in the form of alloy may be referred to as "an alloy for phosphor precursor."

The alloy describe above should contain two or more of the constituent elements of an intended phosphor.

The coprecipitating material described above is obtained by the coprecipitation of compounds used as raw materials of a phosphor (Examples thereof include oxides, hydroxides, sulfides, halides, carbonates and sulfates. Such compounds may be referred to as "raw material compounds" hereinafter.), and in such a material, the phosphor constituent elements are mixed partly or completely at the atomic level. The coprecipitation is typically carried out by combining raw material compounds each containing a distinct phosphor constituent element with each other, and the obtained coprecipitating material contains two or more phosphor constituent elements.

The composition of each of the constituent elements of the phosphor raw material according to the present invention is not particularly limited as long as it contains two or more of the constituent elements of an intended phosphor. However, it preferably contains activator elements $M^1$. Besides the activator elements $M^1$, divalent metal elements $M^2$, tetravalent metal elements $M^4$ including at least Si and trivalent metal elements $M^3$ may be contained therein.

In addition, preferred elements as the activator elements $M^1$, the divalent metal element $M^2$, the trivalent metal elements $M^3$ and the tetravalent metal elements $M^4$ including at least Si are the same as those described in the section of [Alloy for phosphor precursor] later.

The phosphor raw material of the present invention is also characterized in that the constituent elements are uniformly distributed therein. Thus, the phosphor raw material of the present invention can provide a phosphor that contains little or no impurities and is constituted of uniformly distributed elements, thereby making it possible to produce a phosphor excellent in light emission intensity and other light emission properties. In particular, even the activator elements $M^1$, which have been difficult to distribute uniformly in a phosphor and/or a phosphor raw material because of their high molecular weights and low content ratios in the raw material, are uniformly distributed in the phosphor raw material according to the present invention. The activator elements $M^1$ act as the luminescent center ions in a phosphor and contribute to light emission by the phosphor, so that the use of a phosphor raw material in which activator elements $M^1$ are uniformly distributed is very important in improving the light emission properties of the resulting phosphor.

The uniformity of distribution of constituent elements in a phosphor raw material can be determined with, for example, a particle analyzer (DP-1000 manufactured by HORIBA, Ltd.).

The analysis of the phosphor raw material and the alloy for phosphor precursor according to the present invention using a particle analyzer preferably provides the following results.

(1) If the phosphor raw material contains tetravalent metal elements $M^4$ including at least Si (hereinafter, sometimes simply referred to as "metal elements $M^4$") and one or more metal elements other than the metal elements $M^4$;

in a synchronous distribution chart representing the relationship between the cube root voltage of any one of the metal elements $M^4$ and the cube root voltage of any one of the metal elements other than the metal elements $M^4$, which can be measured using a particle analyzer, the absolute deviation of accidental errors therebetween is typically 0.19 or less, preferably 0.17 or less, more preferably 0.15 or less, and even more preferably 0.13 or less.

Here, the metal elements other than the metal elements $M^4$ are preferably one or more elements selected from the group consisting of activator elements $M^1$, divalent metal elements $M^2$ and trivalent metal elements $M^3$, and more preferably one or more elements selected from the group consisting of activator elements $M^1$ and divalent metal elements $M^2$.

(2) If the phosphor raw material contains tetravalent metal elements $M^4$ and one or more activator elements $M^1$;

in a synchronous distribution chart representing the relationship between the cube root voltage of any one of the metal elements $M^4$ and the cube root voltage of any one of the activator elements $M^1$, which can be measured using a particle analyzer, the absolute deviation of accidental errors therebetween is typically 0.4 or less, preferably 0.3 or less, more preferably 0.2 or less, and even more preferably 0.15 or less.

Here, the elements contained in the phosphor raw material in addition to the metal elements $M^4$ and the activator elements $M^1$ are preferably one or more elements selected from the group consisting of divalent metal elements $M^2$ and trivalent metal elements $M^3$, and more preferably divalent metal elements $M^2$.

(3) If the phosphor raw material is an alloy containing one or more activator elements $M^1$ and one or more metal elements other than the activator elements $M^1$;

in a synchronous distribution chart representing the relationship between the cube root voltage of any one of the activator elements $M^1$ and the cube root voltage of any one of the metal elements other than the activator elements $M^1$, which can be measured using a particle analyzer, the absolute deviation of accidental errors therebetween is typically 0.4 or less, preferably 0.3 or less, more preferably 0.2 or less, and even more preferably 0.15 or less.

Here, the elements contained in the phosphor raw material in addition to the activator elements $M^1$ are preferably one or more elements selected from the group consisting of divalent metal elements $M^2$, trivalent metal elements $M^3$ and metal elements $M^4$, more preferably one or more elements selected from the group consisting of divalent metal elements $M^2$ and metal elements $M^4$, and even more preferably metal elements $M^4$.

Although described in detail later, in (1) to (3) stated above, the closer to zero the absolute deviation of accidental errors are, the more uniform the phosphor raw material is and the more likely to be obtained a phosphor having excellent light emission properties is. In addition, the absolute deviation of accidental errors is typically not less than 0.01.

Hereinafter, the principle of a particle analyzer is explained.

It is difficult to measure the mass of each sample particle directly. In a particle analyzer, therefore, sample particles are ionized and excited in a plasma field, and then the intensity of light emitted as the result of the excitation is measured.

More specifically, sample particles are first collected on a filter and then aspirated so as to be carried by helium (He) flow to a He plasma field. The sample particles introduced into the He plasma field are excited and emit rays of light with wavelengths specific to the elements contained therein. The light emission intensities for the elements are each measured by a detector as the detection voltages of a photomultiplier.

Here, each of the measured light emission intensities is supposed to relate to the mass of the relevant element atoms contained in each particle. A particle analyzer calculates the cube root of the light emission intensity assuming that sample particles are spheres, and then outputs values relating to the diameter of the sample particles (hereinafter, sometimes referred to as "cube root voltage (value)"). These values give information about the sample particles. Whether the analyzed two or more elements are contained in a single particle or not can be determined based on whether the elements emit rays of light simultaneously or not.

The principle of a particle analyzer is described below taking an alloy for phosphor precursor (hereinafter, sometimes referred to as "alloy A") containing Sr, Ca, Al, Si and Eu as an example.

In the analysis of alloy A using a particle analyzer, the light emission intensities of Sr, Ca, Al, Si and Eu atoms (values proportional to the atomic masses) are each measured as the detection voltage of a photomultiplier. The cube root voltage described above is obtained as the cube root of the measured detection voltage (light emission intensity), and correlates with the diameter of sample particles.

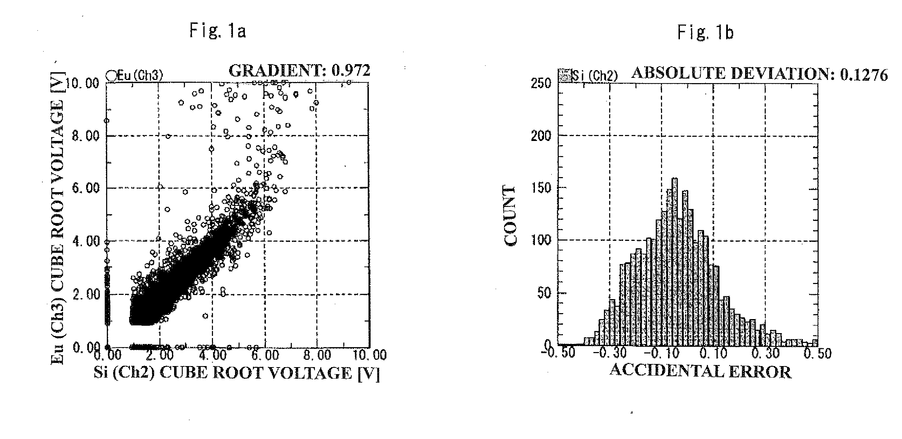

Fig. 1(a) is a synchronous distribution chart representing the relationship between the cube root voltage of Si atoms (horizontal axis) and the cube root voltage of Eu atoms (vertical axis). In Fig. 1(a), a single data point (O) corresponds to a single particle of the alloy. The synchronous distribution chart of Fig. 1(a) includes the data of particles having the cube root voltage in the range of 0 V to 10 V with respect to the horizontal axis (x-axis) and the vertical axis (y-axis). More specifically, the data points distributed on the horizontal axis (x-axis) correspond to the data of free Si particles or particles with the cube root voltage of Eu equal to or less than the lower detection limit thereof. On the other hand, the data points distributed on the vertical axis (y-axis) correspond to the data of free Eu particles or particles with the cube root voltage of Si equal to or less than the lower detection limit thereof. Additionally, the data points having components on both horizontal and vertical axes (x- and y-axes) represent the data of particles of an alloy for phosphor precursor from which Si and Eu atoms simultaneously emit light (hereinafter, sometimes referred to as "synchronized").

Typically, the background is measured and a noise cutoff level is specified so as to eliminate the influence of noise generated by the measuring apparatus.

Almost all the data points, excluding those distributed on each axis, are chosen for analysis. The gradient of the group formed by the synchronized particles is calculated by applying the least-square method to each of the chosen data points, and a line approximating the group and passing through the origin of the synchronous distribution chart is made. The gradient of the approximate line can also be calculated, and this gradient relates to the mass concentration ratio between the two synchronized elements (e.g., Si/Eu in the case where Si and Eu atoms are synchronized).

The length of a perpendicular dropped from each data point (represented by "O" in the synchronous distribution chart) to the approximate line is defined as d, and the length of the perpendicular dropped from a point at the intersection of the approximate line with each perpendicular to the x-axis is defined as H. An accidental error (x) for each data point is calculated using the following formula [A] .

$$\texttt{Accidental error (x) = d/H \quad [A]}$$

Here, accidental errors as the result of overestimation take positive values, whereas accidental errors as the result of underestimation take negative values.

In the present invention, the absolute deviation of accidental errors can be calculated using the following formula B]. It should be noted that the calculation of the accidental errors exclude data points distributed on each axis.

[ Formula 1]

$$\frac{1}{n} \sum_{i=1}^{n} \left| x_i - \overline{x} \right| \qquad \cdots [B]$$

(where $n$ is the number of data points of accidental errors; $\overline{x}$ is the mean accidental error)

The absolute deviation of accidental errors is displayed in a histogram of accidental errors (Fig. 1(b)). The absolute deviation of accidental errors is a numeric form of the variance (dispersion) of synchronized data points, and the larger the absolute deviation of accidental errors is, the greater the variance (dispersion) in the ratio of one element to the other element among the synchronized particles (e.g., the element ratio of Eu to Si; the element ratio herein relates to the mass concentration ratio between the relevant elements) is. On the other hand, the absolute deviation of accidental errors close to zero means that the ratio between the relevant elements is completely uniform among the synchronized particles (e.g., in particles with synchronized Si and Eu, the element ratio between Si and Eu is uniform among the particles). Therefore, the smaller the absolute deviation of accidental errors is, the better for the phosphor raw material according to the present invention.

[Alloy for phosphor precursor]

The alloy for phosphor precursor according to the present invention contains the following elements or other similar elements uniformly.

(i) Tetravalent metal elements $M^4$ including at least Si and one or more metal elements other than Si. Preferably, the metal elements other than Si are one or more elements selected from the group consisting of activator elements $M^1$, divalent metal elements $M^2$ and trivalent metal elements $M^3$. More preferably, the metal elements other than Si contain at least activator elements $M^1$.

(ii) One or more activator elements $M^1$ and one or more metal elements other than the activator elements $M^1$. Preferably, tetravalent metal elements $M^4$ including at least Si are contained as such one or more metal elements other than the activator elements $M^1$.

In (i) and (ii) above, the alloy for phosphor precursor according to the present invention may contain activator elements $M^1$, divalent metal elements $M^2$ and tetravalent metal elements $M^4$ including at least Si. Alkaline earth metal elements are preferable as the divalent metal elements $M^2$. Trivalent metal elements $M^3$ may be contained as well. The activator elements $M^1$ are preferably one or more elements selected from the group consisting of Cr, Mn, Fe, Ce, Pr, Nd, Sm, Eu, Tb, Dy, Ho, Er, Tm and Yb.

More preferably, the alloy for phosphor precursor according to the present invention contains one or more elements selected from the group consisting of Mg, Ca, Sr, Ba and Zn as the divalent metal elements $M^2$, one or more elements selected from the group consisting of Al, Ga, In and Sc as the trivalent metal elements $M^3$, and one or more elements selected from the group consisting of Si, Ge, Sn, Ti, Zr and Hf as the tetravalent metal elements $M^4$. Even more preferably, Ca and/or Sr account for 50 mol% or more of the divalent metal elements $M^2$, Al accounts for 50 mol% or more of the trivalent metal elements $M^3$, and Si accounts for 50 mold% or more of the tetravalent metal elements $M^4$. The most preferably, the alloy for phosphor precursor according to the present invention contains Eu as one of the activator elements $M^1$, Ca and/or Sr as the divalent metal elements $M^2$, Al as one of the trivalent metal elements $M^3$, and Si as one of the tetravalent metal elements $M^4$.

Hereinafter, preferred embodiments of the alloy for phosphor precursor according to the present invention are described.

In the alloy for phosphor precursor according to the present invention, alkaline earth metal elements are preferable as metal elements other than the tetravalent metal elements $M^4$ including at least Si. This makes it possible to produce an industrially useful phosphor that is based on $(Sr, Ca)_2Si_5N_8$, $CaSiAlN_3$ or similar compositions containing Si and alkaline earth metal elements and emits red or yellow light.

In particular, the alloy for phosphor precursor according to the present invention preferably contains activator elements $M^1$, divalent metal elements $M^2$, trivalent metal elements $M^3$ and tetravalent metal elements $M^4$ including at least Si, and is expressed by the general formula [1] below. Such an alloy for phosphor precursor is suitable for the production of composite nitride phosphors expressed by the general formula [2] below.

$$M^1{}_aM^2{}_bM^3{}_cM^4{}_d \qquad [1]$$

$$^1{}_aM^2{}_bM^3{}_cM^4{}_dN_eO_f \qquad [2]$$

(where a, b, c, d, e and f are values satisfying the following requirements:

$$0.00001 \le a \le 0.15;$$

$$a + b = 1;$$

$$0.5 \leq c \leq 1.5;$$

$$0.5 \leq d \leq 1.5;$$

$$2.5 \leq e \leq 3.5;$$

and

$$0 \leq f \leq 0.5)$$

The activator elements $M^1$ may be any kinds of light-emitting ions as long as they can be contained in the host crystal forming such a composite nitride phosphor. The use of one or more elements selected from the group consisting of Cr, Mn, Fe, Ce, Pr, Nd, Sm, Eu, Tb, Dy, Ho, Er, Tm and Yb enables the production of a phosphor with excellent light emission properties, and thus is preferable. Furthermore, using at least Eu as the activator elements $M^1$ will result in a phosphor brightness red light, and thus is more preferable. Besides Eu, one or more coactivator elements may be used as the activator elements $M^1$ in order to provide the phosphor with high brightness and various functions such as a light-accumulating function.

In addition to the activator elements $M^1$, several divalent, trivalent and tetravalent metal elements may be used. To obtain a phosphor with excellent light emission properties, it is preferable that the divalent metal elements $M^2$ are one or more elements selected from the group consisting of Mg, Ca, Sr, Ba and Zn, the trivalent metal elements $M^3$ are one or more elements selected from the group consisting of Al, Ga, In and Sc, and the tetravalent metal elements $M^4$ are one or more elements selected from the group consisting of Si, Ge, Sn, Ti, Zr and Hf.

Furthermore, a composition in which Ca and/or Sr account for 50 mol% or more of the divalent metal elements $M^2$ would yield a phosphor with excellent light emission properties, and thus is preferable. More preferably Ca and/or Sr account for 80 mol% or more of the divalent metal elements $M^2$, even more preferably account for 90 mol% or more thereof, and the most preferably account for 100 mol% thereof.

Moreover, a composition in which Al accounts for 50 mol% or more of the trivalent metal elements $M^3$ would yield a phosphor with excellent light emission properties, and thus is preferable. More preferably Al accounts for 80 mol% or more of the trivalent metal elements $M^3$, even more preferably accounts for 90 mol% or more thereof, and the most preferably accounts for 100 mol% thereof.

Additionally, a composition in which Si accounts for 50 mol% or more of the tetravalent metal elements $M^4$ would yield a phosphor with excellent light emission properties, and thus is preferable. More preferably Si accounts for 80 mol% or more of the trivalent metal elements $M^4$ including at least Si, even more preferably accounts for 90 mol% or more thereof, and the most preferably accounts for 100 mol% thereof.

The composition in which Ca and/or Sr account for 50 mol% or more of the divalent metal elements $M^2$, Al accounts for 50 mol% or more of the trivalent metal elements $M^3$, and Si accounts for 50 mol% or more of the tetravalent metal elements $M^4$ including at least Si would yield a phosphor with markedly excellent light emission properties, and thus is particularly preferable.

Meanwhile, the reasons why the values a to f in the general formulae [1] and [2] satisfying the requirements stated above are preferable are as follows.

The value a of less than 0.00001 may result in insufficient light emission intensity. However, the value a exceeding 0.15 often results in the drop of the light emission intensity due to promoted concentration quenching. Therefore, raw materials are usually formulated so that the value a is in the range of 0.00001 to 0.15. For the same reason, the value a is preferably in the range of 0.0001 to 0.1, more preferably in the range of 0.001 to 0.05, even more preferably in the range of 0.005 to 0.04, and the most preferably in the range of 0.008 to 0.02.

Since the atomic locations of the metal elements $M^2$ are substituted with the activator elements $M^1$ in the host crystal of a phosphor, the composition of raw materials is controlled so that the sum of the values a and b is 1.

The value c of less than 0.5 often results in the drop of the production yield of the phosphor. However, in many cases, the value c exceeding 1.5 also reduces the production yield. Therefore, the composition of raw materials is usually chosen so that the value c is in the range of 0.5 to 1.5. Also to provide sufficient light emission intensity, the value c is preferably in the range of 0.5 to 1.5. It is more preferably in the range of 0.6 to 1.4, and the most preferably in the range of 0.8 to 1.2.

The value d of less than 0.5 often results in the drop of the production yield of the phosphor. However, in many cases, the value d exceeding 1.5 also reduces the production yield. Therefore, the composition of raw materials is usually chosen so that the value d is in the range of 0.5 to 1.5. Also to provide sufficient light emission intensity, the value d is preferably in the range of 0.5 to 1.5. It is more preferably in the range of 0.6 to 1.4, and the most preferably in the range of 0.8 to 1.2.

In a composition of a phosphor expressed by the general formula [2] described above, if the value e indicating the content ratio of nitrogen is less than 2.5, then the production yield of the phosphor often drops. However, the value e exceeding 3.5 also reduces the production yield. Therefore, the value e is typically in the range of 2.5 to 3.5.

The reason for this is as follows.

The value e is a coefficient that indicates the content ratio of nitrogen. Provided that the basic crystal structure is represented by $M^2_{II}M^3_{III}M^4_{IV}N_3$, the value e is expressed by the following formula (II, III and IV indicate the valence):

[ Formula 2]

$$e = \frac{2}{3} + c + \frac{4}{3} d$$

Substitution of the requirements $0.5 \leq c \leq 1.5$ and $0.5 \leq d \leq 1.5$ into this formula yields:

$$1.84 \leq e \leq 4.17.$$

However, the value e being out of the range of 2.5 to 3.5 often results in the drop of the production yield of the phosphor.

Possible sources of oxygen contaminating phosphors expressed by the general formula [2] described above include oxygen originally contained as impurities in metal raw material metals, oxygen entering manufacturing processes such as milling and nitridation process, or the like. The value f indicating the content ratio of oxygen is preferably in the range of 0 to 0.5 as long as decreases in light emission properties of the resulting phosphor are at acceptable levels.

Meanwhile, in the case where the alloy for phosphor precursor according to the present invention contains one or more elements selected from the group consisting of Fe, Ni and Co, the content ratio of each element is typically 500 ppm or lower, and preferably 100 ppm or lower.

Specific examples of the compositions of such an alloy may include EuSrCaAlSi alloy, EuSrAlSi alloy, EuCaAlSi alloy, EuSrMgAlSi alloy, EuCaMgAlSi alloy, EuCaSi alloy, EuSrCaSi alloy, EuSrSi alloy and EuSrGa alloy. More specific examples thereof may include $Eu_{0.008}Sr_{0.792}Ca_{0.2}AlSi$, $Eu_{0.008}Sr_{0.892}Ca_{0.1}AlSi$, $Eu_{0.008}Sr_{0.692}Ca_{0.3}AlSi$, $Eu_{0.008}Ca_{0.892}Mg_{0.1}AlSi$, $Eu_{0.006}Sr_{0.494}Ca_{0.5}AlSi$, $Eu_{0.04}Sr_{1.96}Si_5$ and $Eu_{0.01}Sr_{1.99}Ga$.

It should be noted that the alloy for phosphor precursor according to the present invention can be used not only as raw materials of the composite oxynitride phosphors described above, but also as raw materials of composite nitride phosphors, composite oxide phosphors, composite sulfide phosphors or the like.

Furthermore, the alloy for phosphor precursor according to the present invention can be handled in the air even in a powder form, and thus is much easier to handle than known phosphor raw materials containing metal nitrides. Therefore, the shape of the alloy for phosphor precursor according to the present invention is not limited, and examples thereof may include plates, particles, beads, ribbons and blocks.

The method for producing such an alloy for phosphor precursor according to the present invention is not particularly limited. However, the alloy for phosphor precursor according to the present invention is preferably produced by the method for producing an alloy for phosphor precursor according to the present invention.

[Production of an alloy for phosphor precursor]

The method for producing an alloy for phosphor precursor according to the present invention is particularly suitable for the production of an alloy for phosphor precursor containing tetravalent metal elements $M^4$ including at least Si and one or more alkaline earth metal elements as tetravalent metal elements $M^2$.

An example of the method is one in which raw material metals or an alloy thereof are weighed so as to have the composition expressed by the general formula [1] described above and then melted to be alloyed, wherein Si and/or an alloy containing Si with higher melting points (higher boiling points) are first melted and then alkaline earth metals with lower melting points (lower boiling points) are melted.

<Purity of raw material metals>

Considering the light emission properties of the resulting phosphor, metals to be used as activator elements $M^1$ for the production of the alloy are preferably purified so as to contain impurities at 0.1 mol% or less, and more preferably at 0.01 mol% or less. If Eu is used as the activator element $M^1$, a preferred raw material of Eu is metal Eu. As the raw materials of elements other than the activator elements $M^1$, divalent, trivalent and tetravalent metals are used. For the same reason as that for the activator elements $M^1$, the content ratios of impurities in these metals are preferably 0.1 mol% each or less, and more preferably 0.01 mol% each or less. For example, in the case where one or more elements selected from the group consisting of Fe, Ni and Co are contained in the metals as impurities, the content ratios thereof are typically 500 ppm each or less, and preferably 100 ppm each or less.

<Shape of raw material metals>

Although the shape of raw material metals is not limited, they are typically particles or blocks having diameters in the range of few millimeters to several tens of millimeters.

When alkaline earth metal elements are used as the divalent metal elements $M^2$, the raw materials thereof may be particles or blocks, or have other shapes. However, it is preferable to choose an appropriate shape considering the chemical characteristics of the raw materials. For example, Ca may be used in both forms of particles and blocks because of its proven stability in the air, whereas Sr is preferably used in the form of blocks since it has higher chemical activity than Ca.

<Melting raw material metals>

The method for melting raw material metals is not particularly limited, and the examples thereof may include the following way of weighing and melting raw material metals.

In weighing metal elements the amounts of which may be decreased due to volatilization, reactions with the materials of a crucible or other causes while the metal elements are being melted, excessive amounts of the metal elements may be taken in advance as needed.

In melting metal elements, in particular, for the production of an alloy for phosphor precursor containing Si and alkaline earth metal elements as divalent metal elements $M^2$, it is preferable that metal Si and/or an alloy containing Si with higher melting points (higher boiling points) are first melted and then alkaline earth metals with lower melting points (lower boiling points) are melted because of the following problem.

The melting point of Si is 1410˚C and close to the boiling points of alkaline earth metals (e.g., Ca, Sr and Ba have boiling points of 1494˚C, 1350˚C and 1537˚C, respectively). In particular, the boiling point of Sr is lower than the melting point of Si, and this makes it extremely difficult to melt Sr and Si simultaneously.

However, this problem can be solved by melting metal Si first and, preferably, forming a mother alloy, and then melting alkaline earth metals.

Furthermore, this sequence including the first step of melting metal Si and the second step of melting alkaline earth metals yields alloys with a high purity and accordingly the resulting phosphor, which contains such alloys as raw materials, with markedly improved characteristics.

Although the method for melting raw material metals in the present invention is not particularly limited, typical examples of such a method include resistance heating, electron beam melting, arc melting and high-frequency dielectric heating (hereinafter, sometimes referred to as "high-frequency dielectric melting"). Among the methods mentioned above, arc melting and high-frequency dielectric melting are preferable, and high-frequency dielectric melting is particularly preferable considering the manufacturing cost.

Hereinafter, (1) arc/electron beam melting and (2) high-frequency dielectric melting are taken as examples for detailed explanation.

(1) Arc/electron beam melting

In arc/electron beam melting, raw material metals are melted in the following steps.

i) Metal Si or an alloy containing Si is melted with electron beams or arc discharge.

ii) Then, alkaline earth metals are melted by indirect heating to form an alloy containing both Si and the alkaline earth metals.

This method may be performed by first adding the melted alkaline earth metals to the melt bath containing melted Si and then heating and stirring the contents of the melt bath with electron beams or arc discharge to promote the mixing thereof.

(2) High-frequency dielectric melting

An alloy containing alkaline earth metal elements is highly reactive with oxygen and thus should be melted not in the air but in vacuum or an inert gas. Under such conditions, high-frequency dielectric melting is generally preferable. However, Si is a semiconductor and difficult to melt using high-frequency dielectric heating. One of the causes of this is specific resistance; at 20°C, the specific resistance of aluminum is $2.8 \times 10^{-8}$ Ω·m, while that of polycrystalline Si for semiconductors is $10^5$ Ω·m or higher. Substances with a high specific resistance, such as Si, cannot be easily melted directly by high-frequency dielectric heating, and thus they are usually melted with the help of an electrically conductive susceptor, which transfers heat to Si via thermal conduction or thermal radiation. Although a disk-shaped susceptor or a cylindrical susceptor may be used, a crucible is preferably used as such a susceptor. Typical materials of a susceptor include graphite, molybdenum and silicon carbide, but these materials unfortunately have high reactivity with alkaline earth metals. However, a crucible in which alkaline earth metals can be melted (alumina, calcia or the like) would be made of insulating materials and thus difficult to use as a susceptor. Therefore, alkaline earth metals and metal Si cannot be easily melted simultaneously by indirect heating based on high-frequent induction melting in a known electrically conductive crucible (made of graphite or the like) as a susceptor. This problem can be solved by the following steps.

i) Metal Si is melted in an electrically conductive crucible by indirect heating.
ii) Then, alkaline earth metals are melted in an insulating crucible to form an alloy containing both Si and the alkaline earth metals.

The metal Si may be cooled between the steps i) and ii) or directly forwarded to the step of melting alkaline earth metals without being cooled. If the steps i) and ii) are serially performed, a crucible fabricated by coating an electrically conductive vessel with calcia, alumina or other materials that support melting of alkaline earth metals may be used.

These steps can be described in more detail as follows.

i) Metal Si and another metal M (e.g., Al or Ga) are melted in an electrically conductive crucible by indirect heating to form an electrically conductive alloy (a mother alloy).
ii) Then, another crucible that is resistant to alkaline earth metals is used to melt the mother alloy obtained in the step i), and subsequently alkaline earth metals are melted by high-frequency dielectric melting to form an alloy containing both Si and the alkaline earth metal elements.

Examples of specific methods in which metal Si or a mother alloy containing Si is first melted and then alkaline earth metals are melted may include the method in which metal Si or a mother alloy containing Si is first melted and then alkaline earth metals are added thereto.

In addition, Si may be alloyed with a metal M other than divalent metal elements $M^2$ so as to have electrical conductivity. In this process, the melting point of the resulting alloy is preferably lower than that of Si. The alloy of Si and Al is particularly preferable because the melting point thereof is approximately 1010°C and thus is lower than the boiling points of alkaline earth metal elements.

In the case where a mother alloy of Si and a metal M other than divalent metal elements $M^2$ is used, the composition thereof is not particularly limited, but the mother alloy preferably electric conductivity. In this case, it is preferable that the mixing ratio (mole ratio) of the metal M is typically in the range of 0.01 to 5 with the number of moles of Si being 1 so that the resulting mother alloy has a melting point lower than the boiling points of alkaline earth metal elements.

In addition, metal Si may be further added to the mother alloy containing Si.

In the present invention, metal Si should be melted before alkaline earth metals are melted, but the timing to melt raw material metals other than the metal Si and alkaline earth metals is not particularly limited. Usually, raw material metals with larger amounts or higher melting points are melted in priority to those with smaller amounts or lower melting points.

To disperse activator elements $M^1$ with limited amounts, it is preferable to melt metal Si before melting the raw material metals of the activator elements $M^1$.

To produce an alloy for phosphor precursor that is expressed by the general formula [1] described above and contains Si as one of the tetravalent metal elements $M^4$ including at least Si and at least Sr as the divalent metal elements $M^2$, the following melting steps are preferably used.

(1) A mother alloy of Si and trivalent metal elements $M^3$ is formed. In this step, it is preferable that Si and the trivalent metal elements $M^3$ are alloyed in accordance with the ratio of Si:$M^3$ in the general formula [1].
(2) The mother alloy obtained in (1) is melted and then Sr is melted.
(3) After that, the remaining divalent metal elements and activator elements $M^1$ are melted.

The atmosphere under which such raw material metals are melted is preferably an inert gas, in particular, Ar.
It is usually preferable that the pressure used herein is in the range of $1 \times 10^3$ Pa to $1 \times 10^6$ Pa, and considering the safety, it is advisable that such raw material metals are melted under a pressure equal to or lower than the atmospheric pressure.

<Casting a melted alloy>

Although the melted alloy obtained by melting raw material metals may be directly used to produce a nitrogen-containing alloy, it is preferably cast into a mold to form an aggregate (an alloy ingot). In this casting step, however, segregation may occur depending on the rate of cooling the melted alloy, thereby resulting in the uneven distribution of the composition thereof, which is uniform with the alloy being in the melted state. Therefore, the higher the cooling rate is, the better. It is also preferable that the mold is made of a highly thermally conductive material, such as copper, and has a shape that promotes the diffusion of heat therefrom. Furthermore, the mold is preferably cooled by techniques like water cooling, as needed.
It is preferable that the melted alloy cast into the mold is set as fast as possible with the help of cooling techniques, such as the use of a mold having a large area of the bottom relative to its thickness.
Additionally, the degree of segregation varies depending on the composition of the alloy. It is thus preferable to analyze the samples obtained from several points of the aggregate for their compositions by ICP atomic emission spectrometry or other necessary analytical methods in order to specify the cooling rate required for the prevention of the segregation.
The atmosphere used in such a casting step is preferably an inert gas, in particular, Ar.

<Milling an ingot>

The alloy ingot obtained in the casting step is then ground to produce alloy powder having desired particle diameters and particle size distribution. Examples of methods for milling such an ingot may include dry milling and wet milling, wherein an organic solvent such as ethylene glycol, hexane and acetone is used. This milling step is described in detail below taking dry milling as an example.
This milling step may be divided into several substeps including coase milling, medium milling and fine milling steps. The apparatus used may be the same or different among such substeps.
The coarse milling step herein means the step of milling alloy powder so that approximately 90 wt% of the particles has a diameter of not more than 1 cm, and examples of mills used in this step may include a jaw crusher, a gyratory crusher, a crushing roll and an impact crusher. The medium milling step means the step of milling alloy powder so that approximately 90 wt% of the particles has a diameter of not more than 1 mm, and examples of mills used in this step may include a cone crusher, a crushing roll, a hammer mill and a disk mill. The fine milling step means the step of milling alloy powder so that the particles have the weight-average median diameter described later, and examples of mills used in this step may include a ball mill, a tube mill, a rod mill, a roller mill, a stamp mill, an edge-runner, a vibrating mill and a jet mill.
Particularly in the final milling step, a jet mill is preferably used with the intention of preventing the incorporation of impurities. The alloy ingot is preferably ground in advance into particles with diameters of not more than 2 mm for the use of a jet mill. Such a jet mill injects a fluid from its nozzle into the atmospheric pressure so as to grind particles with the expansion energy generated in association with the injection, thereby enabling the control of the particle diameter by changing the milling pressure and the prevention of impurity incorporation. Depending on the type of an apparatus used, the gauge pressure for milling is typically in the range of 0.01 MPa to 2 MPa, preferably at least 0.05 MPa and less than 0.4 MPa, and more preferably in the range of 0.1 MPa to 0.3 MPa.
To prevent the contamination of the milling steps with impurities such as iron, the compatibility between a mill and particles to be ground always has to be good. For example, surfaces to be in contact with particles are preferably lined with ceramic, in particular, alumina, silicon nitride, tungsten carbide, zirconia or the like.
Furthermore, to prevent the oxidation of the alloy powder, the milling steps are performed preferably under an inert gas atmosphere, and the oxygen concentration in such an inert gas is preferably 10% or lower, and particularly preferably 5% or lower. Additionally, the lower limit of the oxygen concentration is typically approximately 10 ppm. The oxygen concentration controlled to fall within such a specific range probably contributes to the formation of oxide layers on the alloy powder during the milling step and thereby stabilizes the particles. Milling alloy powder under an atmosphere containing oxygen at a concentration exceeding 5% would involve the risk of dust explosion and thus require equipment for suppressing the generation of dust. Although the kind of the inert gas is not particularly limited, nitrogen, argon, helium or the like is used alone or in combination of two or more thereof. Considering the cost, nitrogen is particularly preferable.

In addition, the alloy powder may be cooled during the milling steps to prevent overheating thereof, as needed.

<Size-classification of alloy powder>

The alloy powder ground in the milling step(s) are screened with a screening apparatus based on a mesh such as a vibrating screen and a sifter, an inertial classification apparatus such as an air separator, or a centrifuge such as a cyclone separator so as to have a desired value of the weight-average median diameter $D_{50}$ and desired particle size distribution described later.

In controlling the particle size distribution, it is preferable to classify coarse particles and return the classified particles to a mill, and it is more preferably to repeat this cycle of classification and/or return seamlessly.

This classification step is also performed preferably under an inert gas atmosphere, and the oxygen concentration in such an inert gas is preferably 10% or lower, and particularly preferably 5% or lower. Although the kind of the inert gas is not particularly limited, nitrogen, argon, helium or the like is used alone or in combination of two or more thereof. Considering the cost, nitrogen is particularly preferable.

The diameters of the alloy powder should be controlled depending on the activities of metal elements constituting the alloy powder before the primary nitridation process described later. The weight-average median diameter $D_{50}$ of the alloy powder is typically 100 $\mu$m or less, preferably 80 $\mu$m or less, and particularly preferably 60 $\mu$m or less, as well as is typically 0.1 $\mu$m or more, preferably 0.5 $\mu$m or more, and particularly preferably 1 $\mu$m or more. Meanwhile, alloy powder containing Sr are highly reactive with a surrounding gas. Therefore, in the case where alloy powder containing Sr are used, it is usually desirable that the weight-average median diameter $D_{50}$ thereof is 5 $\mu$m or more. This weight-average median diameter $D_{50}$ for Sr-containing particles is preferably 8 $\mu$m or more, more preferably 10 $\mu$m or more, and particularly preferably 13 $\mu$m or more. A weight-average median diameter $D_{50}$ of less than the lower limit described above may lead to the rise of heating rates in nitridation and other reactions and thereby make it difficult to control such reactions. On the other hand, a weight-average median diameter $D_{50}$ exceeding the upper limit described above may hinder reactions that occur in the inside of the alloy powder, such as nitridation.

[Production of a phosphor]

The method for producing a phosphor using the phosphor raw material according to the present invention is not particularly limited as long as it is suitable for the composition and kind of the phosphor raw material or for the production of the intended phosphor.

A method for producing a phosphor using an alloy for phosphor precursor is described below.

The method for producing a phosphor using the alloy for phosphor precursor according to the present invention or an alloy for phosphor precursor formed by the method for producing an alloy for phosphor precursor according to the present invention is not particularly limited, and the reaction conditions used therein are determined based on the kind of a phosphor, such as an oxide phosphor, a sulfide phosphor and a nitride phosphor. Hereinafter, the method is described taking nitridation reaction as an example.

Nitridation of an alloy is performed, for example, in the following manner. The object of nitridation, i.e., an alloy ingot or alloy powder, is first bedded in a crucible or a tray. Examples of the material of a crucible or a tray used in this step may include boron nitride, silicon nitride, aluminum nitride, tungsten and molybdenum, and boron nitride is preferable because of its excellent corrosion resistance.

The crucible or tray containing the alloy is placed in a heating furnace having the function of controlling the inside atmosphere, and then the air in this system is fully substituted with a nitrogen-containing gas by allowing the nitrogen-containing gas to flow in the system. If necessary, the system may be evacuated before the introduction of the nitrogen-containing gas.

Examples of a nitrogen-containing gas used in the nitridation process may include nitrogen, ammonia and a mixed gas of nitrogen and hydrogen. The oxygen concentration in the system has an effect on the oxygen content ratio in the resulting phosphor, and a phosphor containing too much oxygen would be insufficient in light emission intensity. Therefore, the lower the oxygen concentration in an atmosphere used in the nitridation process is, the better, and the oxygen concentration is typically 1000 ppm or lower, preferably 100 ppm or lower, and more preferably 10 ppm or lower.

In addition, an oxygen absorbent such as carbon or molybdenum may be placed at the area of the system to be heated in order to reduce the oxygen concentration.

The pressure of the nitrogen-containing gas, which fills the system or flows therein and heated to promote nitridation reaction, may be slightly lower than, equal to or higher than the atmospheric pressure. To prevent the oxygen contained in the air from contaminating the system, however, the pressure is preferably equal to or higher than the atmospheric pressure. If a heating furnace used is less airtight, a pressure of less than the atmospheric pressure would allow a large amount of oxygen to get into the system and result in deterioration of the characteristics of the resulting phosphor. The gauge pressure of the nitrogen-containing gas is preferably 0.2 MPa or higher, and the most preferably in the range of 10 MPa to 180 MPa.

The temperature for heating the alloy is typically 800˚C or higher, preferably 1000˚C or higher and more preferably 1200˚C or higher, as well as is typically 2200˚C or lower, preferably 2100˚C or lower and more 2000˚C or lower. The heating temperature of lower than 800˚C significantly prolongs the nitridation process and thus is not preferable. On the other hand, the heating temperature exceeding 2200˚C leads to the volatilization or decomposition of the nitrides formed in the reaction, thereby changing the chemical composition of the resulting nitride phosphor. As a result, the phosphor will have deteriorated characteristics and the reproducibility of the production process will be low.

The heating time used in the nitridation process (period of time for which the maximum temperature is maintained) is that required for the reaction between the alloy and nitrogen, and is typically one minute or longer, preferably 10 minutes or longer, more preferably 30 minutes or longer and even more preferably 60 minutes or longer. If the heating time is shorter than one minute, the nitridation reaction cannot be completed and thus the resulting phosphor will have deteriorated characteristics. The upper limit of the heating time is typically 24 hours considering the production efficiency.

Meanwhile, the method described below may be used as a method for producing a phosphor using the phosphor raw material according to the present invention. This method is particularly useful in producing a phosphor using a coprecipitating material.

As a phosphor raw material, a compound containing one of elements that constitute the intended phosphor, such as a nitride, an oxide, a hydroxide, a carbonate, a nitrate, a sulfate, an oxalate, a carboxylate, a halide and a sulfide, may be used as appropriate to achieve the composition of the intended phosphor, in addition to the phosphor raw material according to the present invention.

The phosphor raw materials are each weighed and then mixed with each other (a mixing step), and the obtained mixture is calcined under predetermined calcination conditions (a calcination step). The calcined mixture is ground, washed and surface-treated as needed to form a phosphor. In addition, when using phosphor raw materials that are unstable in the air, it is preferable to handle them in a glove box filled with an inert gas such as argon gas or nitrogen gas during the weighing, mixing and other steps.

The method for mixing phosphor raw materials is not particularly limited. Examples of mixing methods may include (A) dry mixing and (B) wet mixing methods described below.

(A) A dry mixing method wherein a milling step using a dry mill such as a hammer mill, a roll mill, a ball mill and a jet mill or tools like a mortar and a pestle is combined with a mixing step using a mixing apparatus such as a ribbon blender, a V-shaped blender and a Henschel mixer or tools like a mortar and a pestle so as to grind and mix the raw materials described above.

(B) A wet mixing method wherein a solvent or a dispersion medium such as water, methanol and ethanol is added to the raw materials described above; the components are mixed using tools like a mortar and a pestle or an evaporating dish and a stirrer to form a solution or slurry; and then the solution or slurry is dried with a drying technique such as spray dry, drying by heating and air drying.

In the calcination step, the mixture obtained in the mixing step described above is usually bedded in a heat-resistant vessel, such as a crucible or a tray, made of a material with low reactivity with the phosphor raw materials, and then calcined. Examples of the material of a heat-resistant vessel used in this calcination step may include ceramic such as alumina, quartz, boron nitride, silicon carbide, silicon nitride and magnesium oxide, metals such as platinum, molybdenum, tungsten, tantalum, niobium, iridium and rhodium, alloys containing these metals as the main component, and carbon (graphite). The heat-resistant vessel made of quartz described herein can be used for heat treatment at relatively low temperatures, i.e., at 1200˚C or lower, and preferably at 1000˚C or lower. Among the materials of a heat-resistant vessel listed above, alumina and metals are preferable.

The temperature for calcination is typically 1000˚C or higher and preferably 1200˚C or higher, as well as is typically 1900˚C or lower and preferably 1800˚C or lower. The calcination temperature of less than the lower limit would result in deteriorated light emission properties, whereas the calcination temperature exceeding the upper limit would result in a failure to form the intended phosphor.

The pressure for calcination depends on the calcination temperature and other relevant factors, and thus is not particularly limited. However, the desired calcination pressure is typically 0.01 MPa or higher and preferably 0.1 MPa or higher, as well as is typically 200 MPa or lower and preferably 100 MPa or lower.

The time of calcination depends on the calcination temperature, calcination pressure and other relevant factors, and thus is not particularly limited. However, the calcination time is typically 10 minutes or more, preferably one hour or more and more preferably four hours or more, as well as is typically 24 hours or less, preferably eight hours or less and more preferably six hours or less. The calcination time of shorter than the lower limit would result in incomplete formation reaction, whereas the calcination time exceeding the upper limit would lead to wasteful spending of calcination energy, thereby raising the production cost.

The atmosphere under which the raw material mixture is calcined is not particularly limited. In the production of a nitride phosphor, an inert gas such as nitrogen ($N_2$) gas and argon gas is usually preferable. In the production of an oxide phosphor, the atmosphere is one of such gases as carbon monoxide, carbon dioxide, nitrogen, hydrogen and argon, or a mixed gas of two or more thereof. The atmosphere preferably contains a reducing gas such as carbon monoxide and hydrogen, and a particularly preferred gas as the atmosphere is hydrogen-containing nitrogen.

In the calcination step, a flux may be added to the reaction system so as to promote the growth of quality crystals.

In addition, the calcination step may be divided into a primary calcination step and a secondary calcination step, wherein the raw material mixture obtained in the mixing step is calcined in the primary calcination step and then ground once again with a mill such as a ball mill before proceeding to the secondary calcination step.

The temperature for primary calcination is typically 850˚C or higher, preferably 1000˚C or higher and more preferably 1050˚C or higher, as well as is typically 1350˚C or lower, preferably 1200˚C or lower and more preferably 1150˚C or lower.

The time of primary calcination is typically one hour or more, preferably two hours or more and more preferably four hours or more, as well as is typically 24 hours or less, preferably 15 hours or less and more preferably 13 hours or less.

The conditions for secondary calcination, such as calcination temperature and calcination time, are basically the same as those described above. The flux mentioned above may be added to the reaction system before the primary calcination step or before the secondary calcination step. Also, calcination conditions such as an atmosphere may be different between the primary and secondary calcination steps.

The calcined mixture may be subjected to treatment such as washing, drying, milling and size-classification, if necessary.

In the milling treatment, any of mills listed for the mixing step can be used. To wash the mixture, water such as deionized water, an organic solvent such as methanol and ethanol, or a basic aqueous solution such as aqueous ammonia may be used. The size-classification treatment can be performed in a dry or wet screening method, or using a classification apparatus such as an air-flow classification apparatus and a vibrating screen. In particular, dry classification using a nylon mesh yields a phosphor that has a weight-average median diameter of approximately 20 μm and thus has favorable dispersity.

In addition, it would be preferable to dry the washed mixture. The method for drying the mixture is not particularly limited. However, it is preferable to choose an appropriate drying method considering the behavior of the phosphor. If necessary, the surface treatment of the mixture, such as coating with calcium phosphate or silica, may be performed.

Examples

The present invention is described in more detail below with reference to examples, but not limited by the following examples within the scope of the present invention.

Meanwhile, the conditions for powder X-ray diffractometry and those for measurement with a particle analyzer used in the examples are as follows.

[Powder X-ray diffractometry]

Measuring apparatus: PW1700 manufactured by PANalytical

Conditions for powder X-ray diffractometry:

X-ray source: Cu-Kα radiation (λ= 1.54184 Å)
Predetermined output: 40 kV·30 mA
Optical conditions for measurement: Divergence slit = 1˚
Scattering slit = 1˚

Deceiving slit = 0.2 mm
Diffraction peak position = 2θ (diffraction angle)
Measurement range: 2θ = 10˚ to 89.95˚
Scan speed: 0.05˚ (2θ)/sec, continuous scanning

Sample preparation: Each phosphor was manually ground in an agate mortar and then shaped with a molding tool (PW1001/00 manufactured by former Philips)
Sample holder:PM1781/00 manufactured by PANalytical

Dimensions of the sample cell:
Outer diameter: 53 mum
Inner diameter: 27 mm
Depth: 2.6 mm

[Measurement with a particle analyzer]

Measurement was made using a particle analyzer (DP-1000 manufactured by HORIBA, Ltd.). The specific measurement conditions and method are hereinafter described. Sample particles (few milligrams) were collected on a membrane filter (with a pore size of 0.4 $\mu$m) using a low flow sampler included in the analyzer. Then, the collected sample particles were aspirated and introduced into a plasma field, and allowed to emit rays of light with wavelengths specific to the constituent elements thereof. The light emission intensity was measured as detection voltage, and the cube root of the detection voltage (i.e., the cube root voltage described earlier) was calculated and the histogram of the cube root voltage for each element was obtained. Hereinafter, the obtained histograms are each referred to as the particle size distribution chart of the corresponding element.

In addition, the measurement conditions used are as follows.
Plasma gas: He gas containing 0.1% oxygen
Gas flow rate:260 mL/min

Also, the detection wavelengths for rays of light emitted from the constituent elements and the gain were as follows.
Al: The detection wavelength was 308.217 nm and the gain was 1.2.
Si: The detection wavelength was 288.160 nm and the gain was 1.0.
Eu: The detection wavelength was 420.505 nm and the gain was 1.0.
Ca: The detection wavelength was 393.370 nm and the gain was 0.6.
Sr: The detection wavelength was 346.445 nm and the gain was 0.8.
In addition, the measurement was made in such a manner that the number of particles generating the signal of the reference element (Si) was 1000 per scan and the number of scans was 15. Excluding the data points having clearly abnormal values, the total number of data points analyzed was not less than 4000.

The cube root voltage obtained in this measurement was analyzed in the following method. Pairs of elements were selected from the constituent elements of the sample phosphor, and a synchronous distribution chart representing the relationship between the cube root voltage of one of the selected elements (horizontal axis) and the cube root voltage of the other of the selected elements (vertical axis) was created for each of the pairs. Almost all the data points, excluding those distributed on each axis, were chosen for analysis. The gradient of the group formed by the synchronized particles was calculated by applying the least-square method to each of the chosen data points, and a line approximating the group and passing through the origin of the synchronous distribution chart was made. The gradient of the approximate line was also calculated.

The length of a perpendicular dropped from each data point (represented by "○'" in the synchronous distribution chart) to the approximate line was defined as d, and the length of the perpendicular dropped from a point at the intersection of the approximate line with each perpendicular to the x-axis was defined as H. An accidental error (x) for each data point was calculated using the following formula [A] .

$$\texttt{Accidental error (x) = d/H [A]}$$

The absolute deviation of accidental errors was calculated using the following formula [B]. It should be noted that the calculation of accidental errors excluded data points distributed on each axis.

[ Formula 3]

$$\frac{1}{n}\sum_{i=1}^{n}\left|x_i - \overline{x}\right| \qquad \cdots [B]$$

(where n is the number of data points of accidental errors; x is the mean accidental error)

Meanwhile, the simple metals used as the raw materials of the alloys in the following examples were high-purity metals containing impurities at concentrations of 0.01 mol% or lower. Sr used as a raw material metal took the shape of blocks and the other raw material metals were particles.

[Example 1]

<Production of a mother alloy>

Al and Si as raw material metals were weighed so that the composition ratio thereof was 1:1 (mole ratio) and then melted in a graphite crucible placed in a high-frequency dielectric melting furnace filled with argon gas. The metals were melted, cast into a mold and set so as to form an alloy (a mother alloy) with the metal element composition ratio of Al:Si = 1:1.

<Production of an alloy for phosphor precursor>

So as to achieve the composition ratio of Eu:Sr:Ca:Al:Si = 0.008:0.792:0.2:1:1 (mole ratio), the mother alloy and the other raw material metals were weighed. The furnace was evacuated until the inside pressure was reduced to $5 \times 10^{-2}$ Pa, and then the evaluation was stopped and the furnace was filled with argon until the inside pressure was increased to the predetermined value. The mother alloy placed in a calcia crucible was melted, then Sr was melted, and finally Eu and Ca were added thereto. After the melted content containing all the raw material metals was sufficiently stirred by induced current, the melted content was cast from the crucible to a copper mold (for making a plate with a thickness of 40 mm), which had been cooled in water in advance, so as to be set.

The obtained alloy plate having a thickness of 40 mm and a weight of approximately 5 kg was subjected to inductively coupled plasma atomic emission spectrometry (hereinafter, sometimes referred to as "ICP spectrometry") for analyzing the chemical composition of the alloy. Two samples each having a weight of approximately 10 g were taken from one point in the vicinity of the gravity center of the plate and another point in the vicinity of one end face of the plate. The chemical compositions of these samples determined in ICP spectrometry were as follows:

Center of the plate Eu:Sr:Ca:Al:Si = 0.009:0.782:0.212:1:0.986;

End face of the place Eu:Sr:Ca:Al:Si = 0.009:0.756:0.21:1:0.962.

Considering the precision of this analytical method, these compositions were virtually identical to one another. Therefore, Eu and the other elements seemed to be uniformly distributed.

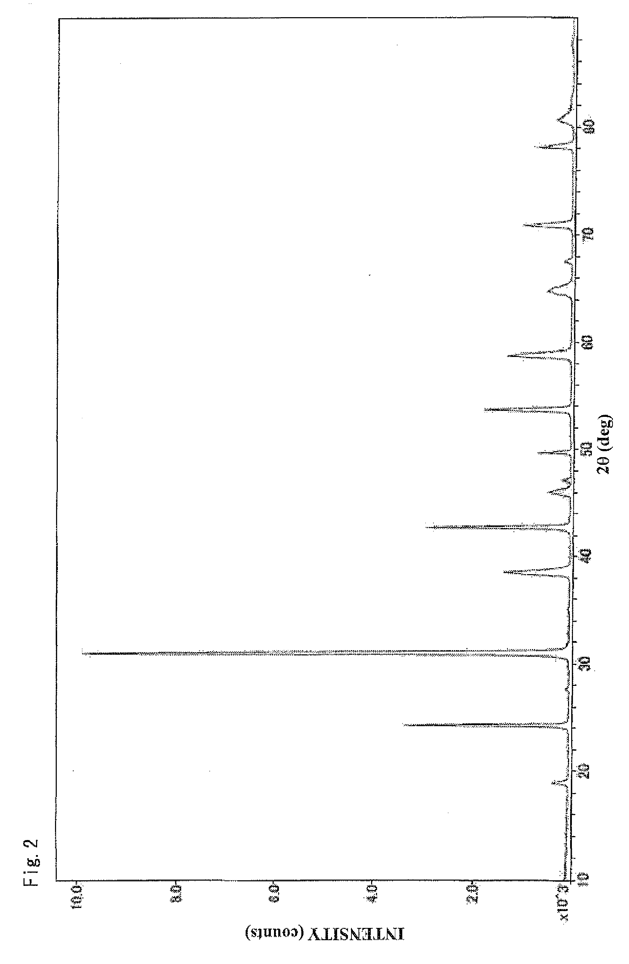

A X-ray powder diffraction pattern of the obtained alloy is shown in Fig. 2. As seen in Fig. 2, the obtained alloy had a X-ray powder diffraction pattern similar to that of $Sr(Si_{0.5}Al_{0.5})_2$, and thus was identified as an intermetallic compound having the $AlB_2$ structure and also known as a alkaline earth metal silicide. Fig. 2 also demonstrated that the obtained alloy was a single-phase alloy.

Subsequently, the obtained alloy plate was roughly ground in an alumina mortar placed under a nitrogen atmosphere until the diameters of the formed coarse particles were approximately 1 mm. The coarse particles were further ground with a supersonic jet mill (PJM-80SP manufactured by Nippon Pneumatic Mfg. Co., Ltd.) under a nitrogen atmosphere (containing 2% oxygen) at a milling pressure of 0.15 MPa and a raw material feed rate of 0.8 kg/hr until the weight-average median diameter $D_{50}$ of the formed particles was 14 $\mu$m. Then, the particles were screened with a 53-$\mu$m mesh so that remaining coarse particles were removed and the alloy was obtained in the form of particles. The obtained alloy powder were analyzed with a particle analyzer in the method described above.

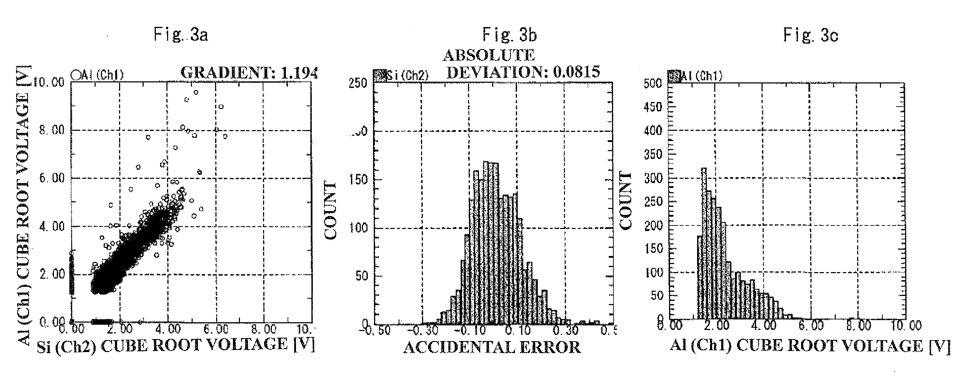

The synchronous distribution chart representing the relationship between the cube root voltage of Si (horizontal axis) and the cube root voltage of Al (vertical axis) is shown in Fig. 3(a). As seen in Fig. 3(a), the gradient of the line made so as to approximate the group of synchronized particles was 1.194. Then, the accidental errors were calculated in the method described earlier, and they are shown in Fig. 3(b) in the form of an error histogram. The absolute deviation of accidental errors, which is a measure of the variance of the accidental errors, was 0.082 as indicated in Table 1. In addition, Fig. 3(c) is the particle size distribution chart for Al.

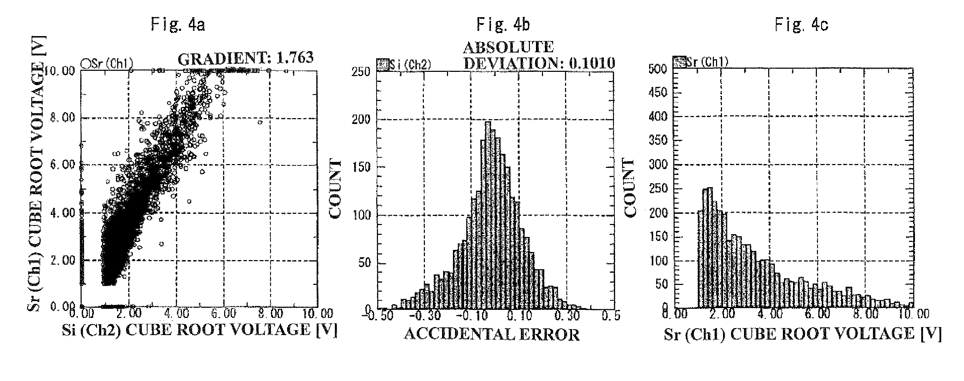

The synchronous distribution chart representing the relationship between the cube root voltage of Si (horizontal axis) and the cube root voltage of Sr (vertical axis) is shown in Fig. 4(a). As seen in Fig. 4(a), the gradient of the line made so as to approximate the group of synchronized particles was 1.763. Then, the accidental errors were calculated in the method described earlier, and they are shown in Fig. 4(b) in the form of an error histogram. The absolute deviation of accidental errors, which is a measure of the variance of the accidental errors, was 0.101 as indicated in Table 1. In addition, Fig. 4(c) is the particle size distribution chart for Sr.

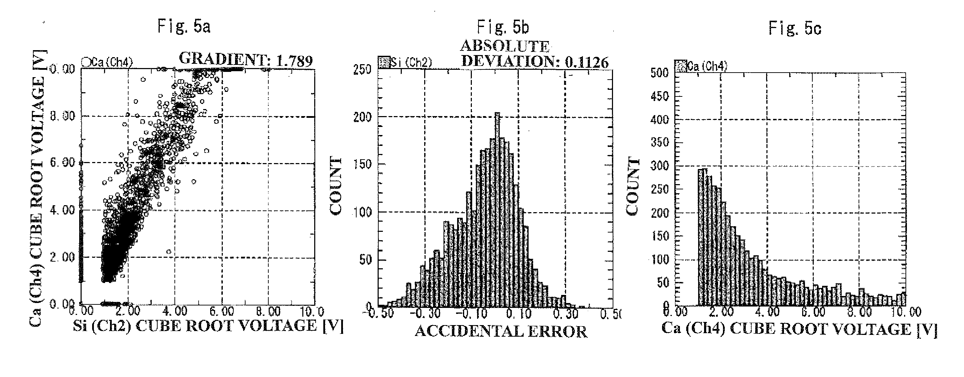

The synchronous distribution chart representing the relationship between the cube root voltage of Si (horizontal axis) and the cube root voltage of Ca (vertical axis) is shown in Fig. 5(a). As seen in Fig. 5(a), the gradient of the line made so as to approximate the group of synchronized particles was 1.789. Then, the accidental errors were calculated in the method described earlier, and they are shown in Fig. 5(b) in the form of an error histogram. The absolute deviation of accidental errors, which is a measure of the variance of the accidental errors, was 0.113 as indicated in Table 1. In addition, Fig. 5(c) is the particle size distribution chart for Ca.

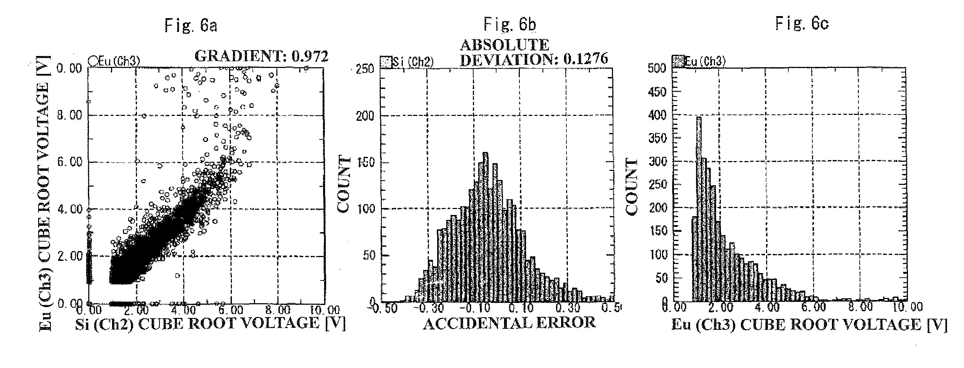

The synchronous distribution chart representing the relationship between the cube root voltage of Si (horizontal axis) and the cube root voltage of Eu (vertical axis) is shown in Fig. 6(a). As seen in Fig. 6(a), the gradient of the line made so as to approximate the group of synchronized particles was 0.972. Then, the accidental errors were calculated in the method described earlier, and they are shown in Fig. 6(b) in the form of an error histogram. The absolute deviation of the accidental errors, which is a measure of the variance of the accidental errors, was 0.128 as indicated in Table 1. In addition, Fig. 6(c) is the particle size distribution chart for Eu.

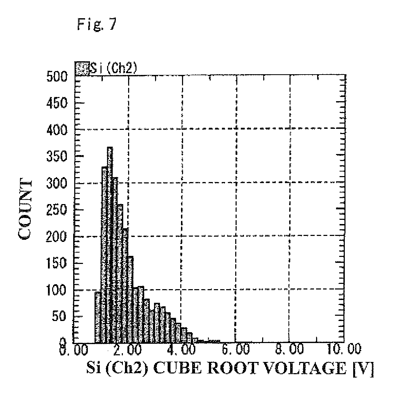

Additionally, Fig. 7 is the particle size distribution chart for Si.

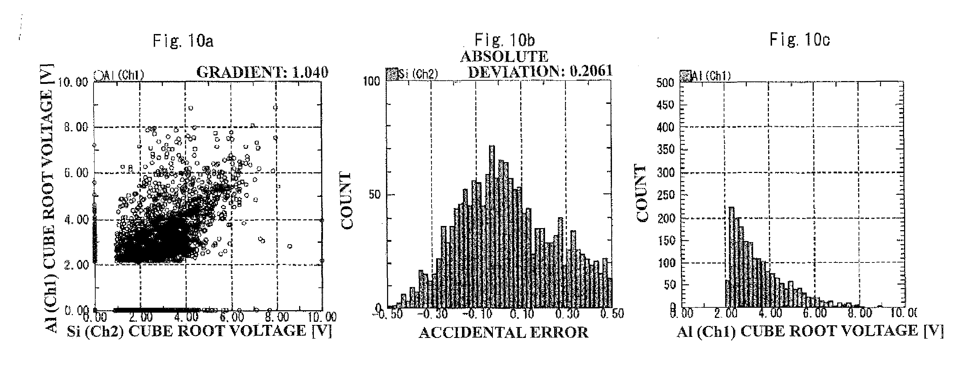

The particle analyzer used had four spectrometers (ch1 to ch4) with different wavelength characteristics. The spectrometer recommended by the manufacturer was used in the analysis described above. The number of the used spectrometer is indicated in Figs. 3 to 7 as, for example, (ch1). This applies also to Figs. 10 to 13.

[Reference Example 1]

<Production of a phosphor>

The alloy plate obtained in Example 1 was ground under nitrogen flow until the resulting alloy powder had a median diameter $D_{50}$ of 20 $\mu$m, and then the alloy powder were bedded on a tray made of boron nitride. The tray was settled in a hot isostatic pressing apparatus (HIP) and then the HIP was evacuated until the inside pressure was reduced to $5 \times 10^{-1}$ Pa, heated to 300˚C, and thereafter evacuated once again at 300˚C for one hour. After that, the following cycle was repeated twice: the apparatus was filled with nitrogen until the inside pressure rose to 1 MPa, cooled, evacuated until the inside pressure dropped to 0.1 Pa, and then filled with nitrogen until the inside pressure rose to 1 MPa once again. Subsequently, the inside pressure of the apparatus was maintained at 190 MPa while the alloy powder were heated to 1900˚C at a heating rate of 10˚C/min. The alloy powder were further heated at this temperature for one hour, yielding the intended composite nitride phosphor, $Sr_{0.792}Ca_{0.2}AlSiN_3:Eu_{0.008}$.

The powder X-ray diffractometry of the obtained phosphor demonstrated that the phosphor had an orthorhombic phase structure formed, which is also observed in $Ca_AlSiN_3$.

According to the method described later, the emission spectrum of this phosphor was recorded with an excitation wavelength of 465 nm. Assuming that the light emission intensity of the phosphor obtained in Comparative Example 3 described later was 100%, the relative peak emission intensity calculated from the obtained spectrum was 100%. Also, assuming that the brightness of the phosphor obtained in Comparative Example 3 was 100%, the relative brightness of this reference example was 186%. The emission wavelength was 630 nm.

<Measurement of the emission spectrum>

The emission spectrum of the phosphor was measured using a 150-W xenon lamp as an excitation light source and a fluorometer (manufactured by JASCO Corporation) equipped with a multi-channel CCD detector C7041 (manufactured by Hamamatsu Photonics K.K.) as a spectrometer. The light emitted from the excitation light source was allowed to pass through a grating monochromator with a focal distance of 10 cm and then through a fiber optic so that the phosphor was irradiated with excitation light having a wavelength of 465 nm only. The light emitted from the phosphor as the result of the irradiation with the excitation light was separated by another grating monochromator with a focal distance of 25 cm, and the spectrometer measured the intensity of the light by wavelength over the wavelength range of 300 nm to 800 nm. After the signal processing of the obtained intensity, such as the sensitivity correction using a PC, the emission spectrum was obtained.

[Example 2]

An alloy was produced under the same conditions as those used in Example 1, except that the constituent elements and the mother alloy were weighed so that the metal element composition ratio was Eu:Sr:Al:Si = 0.008:0.992: 1:1.

The composition analysis of this alloy in ICP spectrometry demonstrated that the composition of the alloy was identical to that specified at the weighing step. Therefore, Eu and the other elements seemed to be uniformly distributed.

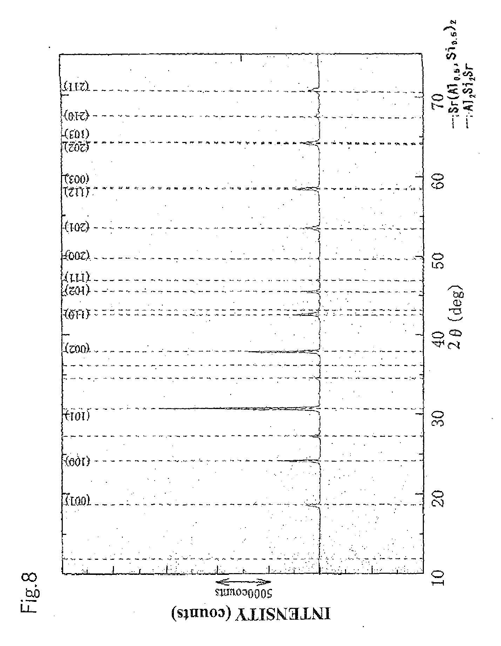

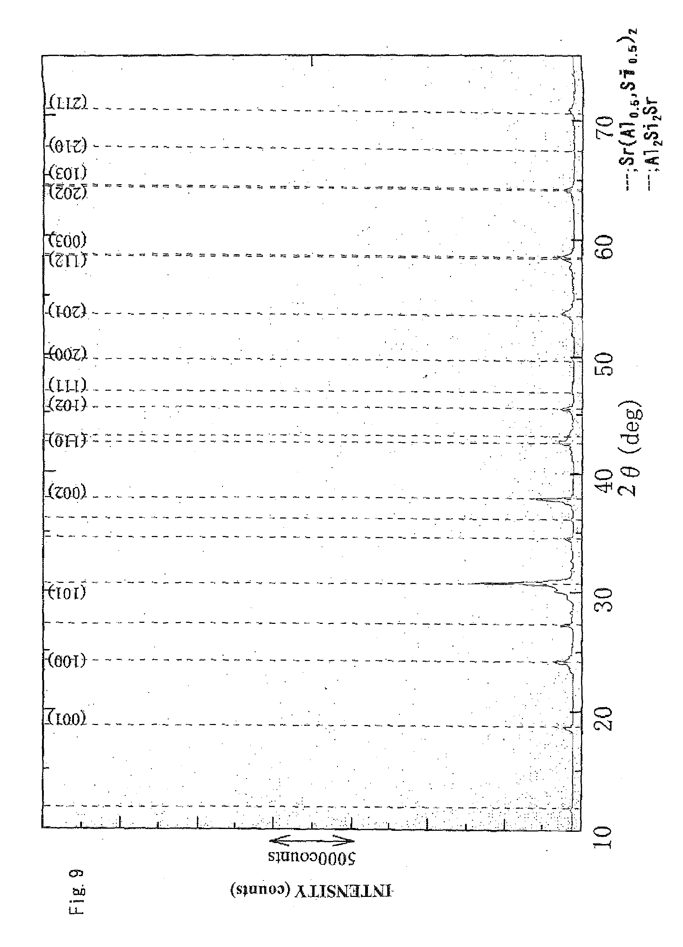

A X-ray powder diffraction pattern of the obtained alloy is shown in Fig. 8. In Fig. 8, the indexed broken lines represent the peaks of $Sr(Si_{0.5}Al_{0.5})_2$, whereas the other broken lines represent the peaks of $Al_2Si_2Sr$. This applies also to Fig. 9.

As shown in Fig. 8, the obtained alloy had the main phase the X-ray powder diffraction pattern of which was similar to that of $Sr(Si_{0.5}Al_{0.5})_2$ included. Fig. 8 also demonstrated that the obtained alloy was a single-phase alloy.

[Reference Example 2]

The alloy prate obtained in Example 2 was ground and calcined under the same conditions as those used in Reference Example 1. The moiety without the light emission capability of the obtained nitride was removed therefrom, and the remaining moiety was washed in water and dried. As a result, the phosphor $Sr_{0.992}AlSiN_3:Eu_{0.008}$ was obtained.

The powder X-ray diffractometry of the obtained phosphor demonstrated that the phosphor had an orthorhombic phase structure formed, which is also observed in $CaAlSiN_3$.

The emission spectrum of this phosphor was measured in the same method as that used in Reference Example 1. The relative peak emission intensity, the relative brightness and the wavelength of emission peak were 96%, 239% and 609 nm, respectively.

[ Example 3]

An alloy plate with a weight of approximately 5 kg was produced under the same conditions as those used in <Production of an alloy for phosphor precursor> of Example 1, except that the constituent elements and the mother alloy were weighed so that the metal element composition ratio was Eu:Sr:Ca:Al:Si = 0.006:0.494:0.5:1:1.

The composition analysis of this alloy in ICP spectrometry demonstrated that the composition of the alloy was identical to that specified at the weighing step. Therefore, Eu and the other elements seemed to be uniformly distributed.

The obtained alloy had the main phase the X-ray powder diffraction pattern of which was similar to that of $Sr(Si_{0.5}Al_{0.5})_2$ included. The X-ray powder diffraction pattern also demonstrated that the obtained alloy was a single-phase alloy.

[Reference Example 3]

The alloy prate obtained in Example 3 was ground and calcined under the same conditions as those used in Reference Example 1 so as to form the phosphor $Sr_{0.494}Ca_{0.5}=,AlSiN_3:Eu_{0.006}$. The powder X-ray diffractometry of the obtained phosphor demonstrated that the phosphor had an orthorhombic phase structure formed, which is also observed in $CaAlSiN_3$.

The emission spectrum of this phosphor was measured in the same method as that used in Reference Example 1. The relative peak emission intensity, the relative brightness and the wavelength of emission peak were 85%, 128% and 641 nm, respectively.

[Example 4]

An alloy plate with a weight of approximately 5 kg was produced under the same conditions as those used in <Production of an alloy for phosphor precursor> of Example 1, except that the constituent elements and the mother alloy were weighed so that the metal element composition ratio was Eu:Sr:Ca:Al:Si = 0.006:0.694:0.3:1:1.

The composition analysis of this alloy in ICP spectrometry demonstrated that the composition of the alloy was Eu:Sr:Ca:Al:Si = 0.0064:0.703:0.295:1:1. Considering the precision of this analytical method, this composition was identical to that specified at the weighing step. Therefore, Eu and the other elements seemed to be uniformly distributed.

The obtained alloy had the main phase the X-ray powder diffraction pattern of which was similar to that of $Sr(Si_{0.5}Al_{0.5})$ included. The X-ray powder diffraction pattern also demonstrated that the obtained alloy was a single-phase alloy.

[Reference Example 4]

The alloy prate obtained in Example 4 was ground and calcined under the same conditions as those used in Reference Example 1 so as to form the phosphor $Sr_{0.694}Ca_{0.3}AlSiN_3:Eu_{0.006}$. The powder X-ray diffractometry of the obtained phosphor demonstrated that the phosphor had an orthorhombic phase structure formed, which is also observed in $CaAlSiN_3$.

The emission spectrum of this phosphor was measured in the same method as that used in Reference Example 1. The relative peak emission intensity, the relative brightness and the wavelength of emission peak were 92%, 173% and 631 nm, respectively.

[Example 5]

An alloy ingot is produced in the following steps, which are similar to those used in <Production of an alloy for phosphor precursor> of Example 1: the constituent elements are weighed so that the metal element composition ratio is Eu:Sr:Si = 0.016:1.984:5; the raw material metals are melted under an argon atmosphere using the arc melting technique, wherein the arc first reaches silicon and the melted metals are stirred with current so as to be uniform; the melted raw material metals are cast into a mold; and then the content in the mold is rapidly cooled. In this way, an alloy ingot containing fine crystalline phases composed of the uniformly dispersed activator elements, such as Eu, is obtained.

The obtained alloy ingot has the main phase the X-ray powder diffraction pattern of which is identified as that of $SrSi_2$ included and contains a small amount of the Si phase. In some cases, the X-ray powder diffraction pattern demonstrates that the obtained alloy contains small amounts of $SrSi$, $Sr_4Si_7$, $Sr_5Si_3$ and/or $Sr_7Si$ phases besides the main phase.

[Reference Example 5]

The alloy ingot obtained in Example 5 is ground in an alumina mortar placed under a nitrogen atmosphere, and then screened with a 53-$\mu$m mesh. The obtained alloy powder are placed in a vessel made of boron nitride. The apparatus is evacuated to vacuum and then filled with nitrogen until the inside pressure rises to 0.92 MPa. Subsequently, the alloy powder are heated to 1800°C and maintained at this temperature for two hours, yielding the phosphor, $Sr_{1.984}Si_5N_8:Ei_{0.016}$. The obtained phosphor exhibits the X-ray powder diffraction pattern of the high-purity $Sr_2Si_5N_8$ phase.

The emission spectrum of this phosphor measured in the same method as that used in Reference Example 1 has the emission peak in the wavelength range of 610 nm to 620 nm. The peak emission intensity observed is equivalent to that of Comparative Example 3.

[Example 6]

An alloy is produced under the same conditions as those used in Example 5, except that the metal element composition ratio is Eu:Sr:Si = 0.04:1.96:5.

[Reference Example 6]

Using the alloy obtained in Example 6, a phosphor is produced under the same conditions as those used in Reference Example 5. The obtained phosphor is represented by $Sr_{1.96}Si_5N_8:Eu_{0.04}$, which exhibits the X-ray powder diffraction pattern of the high-purity $Sr_2Si_5N_8$ phase.

The emission spectrum of this phosphor measured in the same method as that used in Reference Example 1 has the emission peak at a wavelength of approximately 630 nm. The peak emission intensity observed is equivalent to that of Comparative Example 3.

[Comparative Example 1]

According to the production of an alloy for phosphor precursor in Example 1, the constituent elements and the mother alloy were weighed so that the metal element composition ratio was Eu:Sr:Ca:Al:Si = 0.008:0.792:0.2:1:1. However, Si could not be melted and thus no alloy was obtained.

[ Comparative Example 2]

An alloy was produced in the following steps, which were similar to those used in the production of an alloy for phosphor precursor in Example 1: the constituent elements were weighed so that the metal element composition ratio was Eu:Sr:Al:Si = 0.008:0.992:1:1; the raw material metals were almost simultaneously melted under an argon atmosphere using the arc melting technique. The X-ray powder diffraction pattern of the obtained alloy is shown in Fig. 9.

Compared with Comparative Example 2 (Fig. 9), Example 2 (Fig. 8) is clearly improved in terms of crystallinity and purity as an intermetallic compound.

[Comparative Example 3]

$Eu_2O_3$ (manufactured by RARE METALLIC Co., Ltd.), $Ca_3N_2$ (manufactured by SERAC; 200-mesh pass), AlN (manufactured by TOKUYAMA Corp.; grade F) and $Si_3N_4$ (SN-E10 manufactured by Ube Industries, Ltd.) were weighed under an argon atmosphere so that the metal element composition ratio was Eu:Ca:Al:Si = 0.008:0.992:1:1, and then manually mixed with each other in an alumina mortar placed under an argon atmosphere for 20 minutes to form a phosphor raw material. The obtained phosphor raw material was analyzed with a particle analyzer in the method described above.

The synchronous distribution chart representing the relationship between the cube root voltage of Si (horizontal axis) and the cube root voltage of Al (vertical axis) is shown in Fig. 10(a). As seen in Fig. 10(a), the gradient of the line made so as to approximate the group of synchronized particles was 1.040. Then, the accidental errors were calculated in the method described earlier, and they are shown in Fig. 10(b) in the form of an error histogram. The absolute deviation of accidental errors, which is a measure of the variance of the accidental errors, was 0.206 as indicated in Table 1. In addition, Fig. 10(c) is the particle size distribution chart for Al.

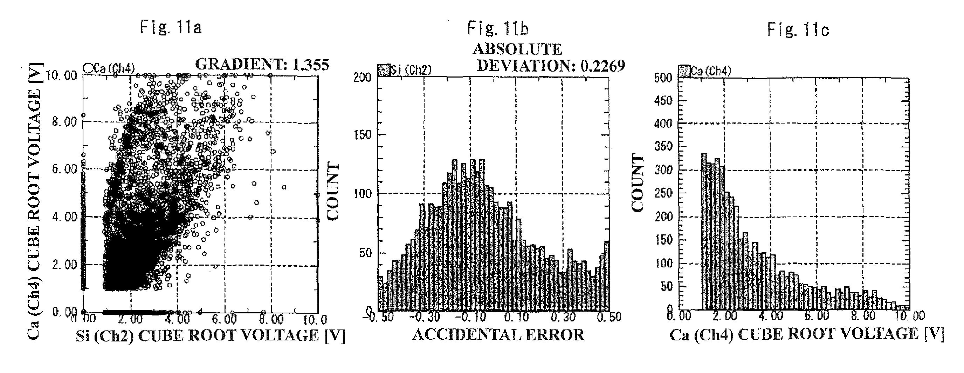

The synchronous distribution chart representing the relationship between the cube root voltage of Si (horizontal axis) and the cube root voltage of Ca (vertical axis) is shown in Fig. 11 (a) . As seen in Fig. 11(a), the gradient of the line made so as to approximate the group of synchronized particles was 1.355. Then, the accidental errors were calculated in the method described earlier, and they are shown in Fig. 11(b) in the form of an error histogram. The absolute deviation of accidental errors, which is a measure of the variance of the accidental errors, was 0.227 as indicated in Table 1. In addition, Fig. 11(c) is the particle size distribution chart for Ca.

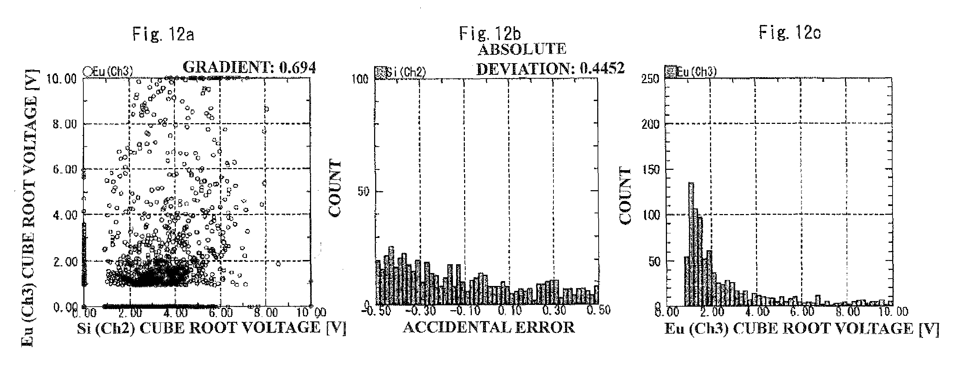

The synchronous distribution chart representing the relationship between the cube root voltage of Si (horizontal axis) and the cube root voltage of Eu (vertical axis) is shown in Fig. 12(a). As seen in Fig. 12(a), the gradient of the line made so as to approximate the group of synchronized particles was 0.694. Then, the accidental errors were calculated in the method described earlier, and they are shown in Fig. 12(b) in the form of an error histogram. The absolute deviation of accidental errors, which is a measure of the variance of the accidental errors, was 0.445 as indicated in Table 1. In addition, Fig. 12(c) is the particle size distribution chart for Eu.

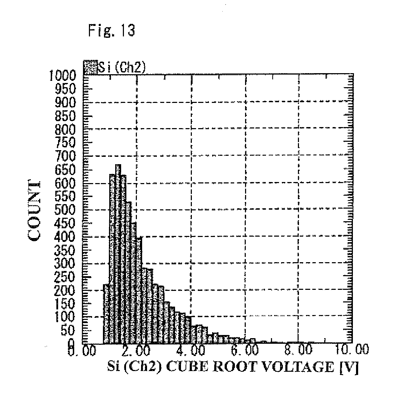

Additionally, Fig. 13 is the particle size distribution chart for Si.

[Table 1]

|  | Absolute deviation of accidental errors | |
|---|---|---|
|  | Example 1 | Comparative Example 3 |
| Al/Si | 0.082 | 0.206 |
| Sr/Si | 0.101 | - |
| Ca/Si | 0.113 | 0.227 |
| Eu/Si | 0.128 | 0.445 |

The obtained phosphor raw material was bedded in a crucible made of boron nitride, and the crucible was settled in an atmosphere-heating furnace. The furnace was evacuated until the inside pressure was reduced to $1 \times 10^{-2}$ Pa and then filled with nitrogen until the inside pressure rose to 0.1 MPa. Subsequently, the phosphor raw material was heated to 1600°C and maintained at this temperature for five hours, yielding the phosphor. The emission spectrum of the obtained phosphor measured in the method described earlier indicated that the emission wavelength was 648 nm.

These results demonstrate the following facts. As is clearly seen in Table 1, the phosphor raw material according to the present invention, represented by Example 1, has the absolute deviation of accidental errors smaller than that of a known phosphor raw material, represented by Comparative Example 3, thereby suggesting that the constituent elements are uniformly distributed in the phosphor raw material according to the present invention. The difference in the absolute deviation of accidental errors between Example 1 and Comparative Example 3 is particularly significant with respect to Eu used as the activator element M[1]. This indicates that, in the phosphor raw material according to the present invention, even activator elements having a high specific gravity and a low content ratio (in other words, activator elements that are difficult to distribute uniformly in a phosphor raw material) are distributed uniformly. Furthermore, the phosphor raw material according to the present invention probably enables distributing its constituent elements uniformly in itself and producing phosphors with markedly high brightness and other excellent light emission properties.

Although the present invention was described in detail with reference to the particular examples, it will be obvious to those skilled in the art that various changes may be made without departing from the spirit and scope of the present invention.

In addition, the present application is based on Japanese Patent Application filed on February 28, 2006 (Japanese Patent Application No. 2006-053093), the entire disclosure of which is hereby incorporated by reference.

**Claims**

1. A phosphor raw material in the form of an alloy, comprising at least Si and one or more metal elements other than Si.

2. The phosphor raw material according to Claim 1, wherein the metal elements other than Si are one or more activator elements $M^1$.

3. The phosphor raw material according to Claim 2, wherein the one or more activator elements $M^1$ are contained uniformly.

4. The phosphor raw material according to Claim 1, wherein the phosphor raw material is an alloy containing activator elements $M^1$, divalent metal elements $M^2$ and tetravalent metal elements $M^4$ including at least Si.

5. The phosphor raw material according to Claim 4, wherein the divalent metal elements $M^2$ include alkaline earth metal elements.

6. The phosphor raw material according to Claim 4, further comprising trivalent metal elements $M^3$.

7. The phosphor raw material according to Claim 4, wherein the activator elements $M^1$ are one or more elements selected from the group consisting of Cr, Mn, Fe, Ce, Pr, Nd, Sm, Eu, Tb, Dy, Ho, Er, Tm and Yb.

8. The phosphor raw material according to Claim 6, wherein the divalent metal elements $M^2$ are one or more elements selected from the group consisting of Mg, Ca, Sr, Ba and Zn,
the trivalent metal elements $M^3$ are one or more elements selected from the group consisting of Al, Ga, In and Sc, and the tetravalent metal elements $M^4$ are one or more elements selected from the group consisting of Ge, Sn, Ti, Zr and Hf.

9. The phosphor raw material according to Claim 8, wherein Ca and/or Sr account for 50 mol% or more of the divalent metal elements $M^2$,
Al accounts for 50 mol% or more of the trivalent metal elements $M^3$, and
Si accounts for 50 mol% or more of the tetravalent metal elements $M^4$ including at least Si.

10. The phosphor raw material according to Claim 8, wherein the activator elements $M^1$ include Eu, the divalent metal elements $M^2$ include Ca and/or Sr, the trivalent metal elements $M^3$ include Al, and the tetravalent metal elements $M^4$ including at least Si include Si.

11. A phosphor raw material, comprising tetravalent metal elements $M^4$ including at least Si and one or more metal elements other than the metal elements $M^4$,
wherein, in a synchronous distribution chart representing the relationship between the cube root voltage of any one of the metal elements $M^4$ and the cube root voltage of any one of the metal elements other than the metal elements $M^4$, which can be measured using a particle analyzer, the absolute deviation of accidental errors therebetween is equal to or less than 0.19.

12. The phosphor raw material according to Claim 11, wherein the metal elements other than the metal elements $M^4$ are one or more elements selected from the group consisting of activator elements $M^1$, divalent metal elements $M^2$ and trivalent metal elements $M^3$.

**13.** The phosphor raw material according to Claim 11, wherein the phosphor raw material contains activator elements $M^1$.

**14.** The phosphor raw material according to Claim 11, wherein the phosphor raw material is in the form of an alloy.

**15.** The phosphor raw material according to Claim 11, wherein the phosphor raw material is an alloy containing activator elements $M^1$, divalent metal elements $M^2$ and tetravalent metal elements $M^4$ including at least Si.

**16.** The phosphor raw material according to Claim 15, wherein the divalent metal elements $M^2$ include alkaline earth metal elements.

**17.** The phosphor raw material according to Claim 15, further comprising trivalent metal elements $M^3$.

**18.** The phosphor raw material according to Claim 15, wherein the activator elements $M^1$ are one or more elements selected from the group consisting of Cr, Mn, Fe, Ce, Pr, Nd, Sm, Eu, Tb, Dy, Ho, Er, Tm and Yb.

**19.** The phosphor raw material according to Claim 17, wherein the divalent metal elements $M^2$ are one or more elements selected from the group consisting of Mg, Ca, Sr, Ba and Zn,
the trivalent metal elements $M^3$ are one or more elements selected from the group consisting of Al, Ga, In and Sc, and the tetravalent metal elements $M^4$ should include at least Si and may further include one or more elements selected from the group consisting of Ge, Sn, Ti, Zr and Hf.

**20.** The phosphor raw material according to Claim 19, wherein Ca and/or Sr account for 50 mol% or more of the divalent metal elements $M^2$,
Al accounts for 50 mol% or more of the trivalent metal elements $M^3$, and
Si accounts for 50 mol% or more of the tetravalent metal elements $M^4$ including at least Si.

**21.** The phosphor raw material according to Claim 19, wherein the activator elements $M^1$ include Eu, the divalent metal elements $M^2$ include Ca and/or Sr, the trivalent metal elements $M^3$ include Al, and the tetravalent metal elements $M^4$ including at least Si include Si.

**22.** A phosphor raw material, comprising tetravalent metal elements $M^4$ including at least Si and one or more activator elements $M^1$,
wherein, in a synchronous distribution chart representing the relationship between the cube root voltage of any one of the metal elements $M^4$ and the cube root voltage of any one of the activator elements $M^1$, which can be measured using a particle analyzer, the absolute deviation of accidental errors therebetween is equal to or less than 0.4.

**23.** The phosphor raw material according to Claim 22, wherein the phosphor raw material is in the form of an alloy.

**24.** The phosphor raw material according to Claim 22, wherein the phosphor raw material is an alloy containing activator elements $M^1$, divalent metal elements $M^2$ and tetravalent metal elements $M^4$ including at least Si.

**25.** The phosphor raw material according to Claim 24, wherein the divalent metal elements $M^2$ include alkaline earth metal elements.

**26.** The phosphor raw material according to Claim 24, further comprising trivalent metal elements $M^3$.

**27.** The phosphor raw material according to Claim 24, wherein the activator elements $M^1$ are one or more elements selected from the group consisting of Cr, Mn, Fe, Ce, Pr, Nd, Sm, Eu, Tb, Dy, Ho, Er, Tm and Yb.

**28.** The phosphor raw material according to Claim 26, wherein the divalent metal elements $M^2$ are one or more elements selected from the group consisting of Mg, Ca, Sr, Ba and Zn,
the trivalent metal elements $M^3$ are one or more elements selected from the group consisting of Al, Ga, In and Sc, and the tetravalent metal elements $M^4$ should include at least Si and may further include one or more elements selected from the group consisting of Ge, Sn, Ti, Zr and Hf.

**29.** The phosphor raw material according to Claim 28, wherein Ca and/or Sr account for 50 mol% or more of the divalent metal elements $M^2$,
Al accounts for 50 mol% or more of the trivalent metal elements $M^3$, and

Si accounts for 50 mol% or more of the tetravalent metal elements $M^4$ including at least Si.

**30.** The phosphor raw material according to Claim 28, wherein the activator elements $M^1$ include Eu, the divalent metal elements $M^2$ include Ca and/or Sr, the trivalent metal elements $M^3$ include Al, and the tetravalent metal elements $M^4$ including at least Si include Si.

**31.** A phosphor raw material, comprising one or more activator elements $M^1$ and one or more metal elements other than the activator elements $M^1$,
wherein, in a synchronous distribution chart representing the relationship between the cube root voltage of any one of the activator elements $M^1$ and the cube root voltage of any one of the metal elements other than the activator elements $M^1$, which can be measured using a particle analyzer, the absolute deviation of accidental errors therebetween is equal to or less than 0.4.

**32.** The phosphor raw material according to Claim 31, wherein the phosphor raw material contains tetravalent metal elements $M^4$ including at least Si.

**33.** A method for producing an alloy for phosphor precursor containing tetravalent metal elements $M^4$ including at least Si and one or more alkaline earth metal elements as divalent metal elements $M^2$, **characterized in that** a step of melting Si and/or an alloy containing Si is performed before a step of melting alkaline earth metals.

**34.** The method for producing an alloy for phosphor precursor according to Claim 33, wherein the Si and/or the alloy containing Si and the alkaline earth metals are melted by high-frequency dielectric heating.

Fig. 1a

GRADIENT: 0.972

Eu (Ch3)

Eu (Ch3) CUBE ROOT VOLTAGE [V]

Si (Ch2) CUBE ROOT VOLTAGE [V]

Fig. 1b

ABSOLUTE DEVIATION: 0.1276

Si (Ch2)

COUNT

ACCIDENTAL ERROR

EP 1 990 396 A1

Fig. 2

Fig. 3a

Fig. 3b

Fig. 3c

EP 1 990 396 A1

Fig. 4a

Fig. 4b

Fig. 4c

GRADIENT: 1.763

ABSOLUTE
DEVIATION: 0.1010

Sr (Ch1) CUBE ROOT VOLTAGE [V]

Si (Ch2) CUBE ROOT VOLTAGE [V]

ACCIDENTAL ERROR

Sr (Ch1) CUBE ROOT VOLTAGE [V]

Fig. 5a

Fig. 5b

Fig. 5c

Fig. 6a

Fig. 6b

Fig. 6c

GRADIENT: 0.972

ABSOLUTE
DEVIATION: 0.1276

Eu (Ch3) CUBE ROOT VOLTAGE [V]

Si (Ch2) CUBE ROOT VOLTAGE [V]

COUNT

ACCIDENTAL ERROR

COUNT

Eu (Ch3) CUBE ROOT VOLTAGE [V]

EP 1 990 396 A1

Fig. 7

Fig.8

Fig. 9

--- ; Sr(Al$_{0.5}$,Si$_{0.5}$)$_2$
--- ; Al$_2$Si$_2$Sr

Fig. 10a

Fig. 10b

Fig. 10c

Fig. 10a: Al (Ch1) CUBE ROOT VOLTAGE [V] vs Si (Ch2) CUBE ROOT VOLTAGE [V], GRADIENT: 1.040

Fig. 10b: COUNT vs ACCIDENTAL ERROR, ABSOLUTE DEVIATION: 0.2061

Fig. 10c: COUNT vs Al (Ch1) CUBE ROOT VOLTAGE [V]

Fig. 11a

Fig. 11b

Fig. 11c

Fig. 12a

Fig. 12b

Fig. 12c

GRADIENT: 0.694

ABSOLUTE
DEVIATION: 0.4452

Eu (Ch3) CUBE ROOT VOLTAGE [V] (y-axis, Fig. 12a)
Si (Ch2) CUBE ROOT VOLTAGE [V] (x-axis, Fig. 12a)

COUNT (y-axis, Fig. 12b)
ACCIDENTAL ERROR (x-axis, Fig. 12b)

COUNT (y-axis, Fig. 12c)
Eu (Ch3) CUBE ROOT VOLTAGE [V] (x-axis, Fig. 12c)

EP 1 990 396 A1

Fig. 13

<table>
<tr><td colspan="2"><b>INTERNATIONAL SEARCH REPORT</b></td><td>International application No.<br>PCT/JP2007/053620</td></tr>
</table>

| A. CLASSIFICATION OF SUBJECT MATTER |
|---|
| C09K11/64(2006.01)i, C09K11/08(2006.01)i, C22C28/00(2006.01)i |

According to International Patent Classification (IPC) or to both national classification and IPC

| B. FIELDS SEARCHED |
|---|

Minimum documentation searched (classification system followed by classification symbols)
C09K11/00-11/89

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CAplus(STN)

| C. DOCUMENTS CONSIDERED TO BE RELEVANT | | |
|---|---|---|
| Category* | Citation of document, with indication, where appropriate, of the relevant passages | Relevant to claim No. |
| A | JP 2005-298721 A (Nichia Chemical Industries, Ltd.), 27 October, 2005 (27.10.05), Claims; Par. No. [0068] (Family: none) | 1-34 |
| A | JP 2004-235598 A (Nichia Chemical Industries, Ltd.), 19 August, 2004 (19.08.04), Claims; Par. No. [0049] & EP 1433831 A1 & CN 1522291 A & US 2004/135504 A1 | 1-34 |
| A | WO 2005/104767 A2 (ARIZONA BOARD OF REGENTS), 10 November, 2005 (10.11.05), Full text & EP 1740674 A2 & CN 1942552 A | 1-34 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 May, 2007 (21.05.07) | 05 June, 2007 (05.06.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2007/053620 |

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2006-307182 A (Mitsubishi Chemical Corp.), 09 November, 2006 (09.11.06), Full text & WO 2006/106948 A1 | 1-34 |

Form PCT/ISA/210 (continuation of second sheet) (April 2005)

**REFERENCES CITED IN THE DESCRIPTION**

**Patent documents cited in the description**

- JP 2003515665 PCT
- JP 2003206481 A
- JP 2005054182 A
- JP 2006053093 A

**Non-patent literature cited in the description**

- **M. IMAI.** *Applied Physics Letters,* 2002, vol. 80, 1019-1021
- **M. IMAI.** *Physical Review B,* 2003, vol. 68, 064512